# EUROPEAN PATENT SPECIFICATION

(11) **EP 3 858 010 B1**
(45) Date of publication and mention of the grant of the patent: **01.06.2022**
(21) Application number: 19766372.7
(22) Date of filing: 02.09.2019
(51) Int. Cl.: H04W 74/08, H04W 36/06

(54) **USER EQUIPMENT FOR OBTAINING A BAND WIDTH PART FOR A RANDOM ACCESS, A NETWORK NODE, AND CORRESPONDING METHODS IN A WIRELESS COMMUNICATION NETWORK**
BENUTZERGERÄT ZUM ERHALTEN EINES BANDBREITENTEILS FÜR EINEN DIREKTZUGRIFF, NETZWERKKNOTEN UND ZUGEHÖRIGE VERFAHREN IN EINEM DRAHTLOSKOMMUNIKATIONSNETZWERK
ÉQUIPEMENT UTILISATEUR PERMETTANT D'OBTENIR UNE PARTIE DE BANDE PASSANTE POUR UN ACCÈS ALÉATOIRE, NOEUD DE RÉSEAU ET PROCÉDÉS CORRESPONDANTS DANS UN RÉSEAU DE COMMUNICATION SANS FIL

(30) Priority: 27.09.2018 US 201862737146 P
(43) Date of publication of application: 04.08.2021
(73) Proprietor: TELEFONAKTIEBOLAGET LM ERICSSON (PUBL), 164 83 Stockholm (SE)
(72) Inventor: CHRISTOFFERSSON, Jan, 975 61 LULEÅ (SE); WANG, Min, 977 53 LULEÅ (SE); FOLKE, Mats, 162 43 VÄLLINGBY (SE)
(74) Representative: Ericsson
(86) International application number: PCT/SE2019/050818
(87) International publication number: WO 2020/067951

(56) References cited:
- ZTE ET AL: "Considering on the RA triggered BWP switch in case SUL is configured", 3GPP DRAFT; R2-1812950 CONSIDERING ON THE RA TRIGGERED BWP SWITCH IN CASE SUL IS CONFIGURED, 3RD GENERATION PARTNERSHIP PROJECT (3GPP), MOBILE COMPETENCE CENTRE ; 650, ROUTE DES LUCIOLES ; F-06921 SOP , vol. RAN WG2, no. Gothenburg, Sweden; 20180820 - 20180824 15 August 2018 (2018-08-15), XP051522534, Retrieved from the Internet: URL:http://www.3gpp.org/ftp/tsg%5Fran/WG2% 5FRL2/TSGR2%5F103/Docs/R2%2D1812950%2Ezip [retrieved on 2018-08-15]
- "5G; NR; Medium Access Control (MAC) protocol specification (3GPP TS 38.321 version 15.2.0 Release 15)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP RAN, no. V15.2.0 18 September 2018 (2018-09-18), pages 1-74, XP014330482, Retrieved from the Internet: URL:http://www.etsi.org/deliver/etsi_ts/13 8300_138399/138321/15.02.00_60/ts_138321v1 50200p.pdf [retrieved on 2018-09-18]
- OPPO: "Switching BWP for CB RACH", 3GPP DRAFT; R2-1807536 - SWITCHING BWP FOR CB RACH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Busan, Korea; 20180521 - 20180525 10 May 2018 (2018-05-10), XP051464143, Retrieved from the Internet: URL:http://www.3gpp.org/ftp/tsg%5Fran/WG2% 5FRL2/TSGR2%5F102/Docs [retrieved on 2018-05-10]
- CATT: "Further issues with DL BWP switching for CFRA", 3GPP DRAFT; R2-1809515 FURTHER ISSUES WITH DL BWP SWITCHING FOR CFRA - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS C , vol. RAN WG2, no. Montreal, Canada; 20180702 - 20180706 1 July 2018 (2018-07-01), XP051466800, Retrieved from the Internet: URL:http://www.3gpp.org/ftp/Meetings%5F3GP P%5FSYNC/RAN2/Docs [retrieved on 2018-07-01]
- HUAWEI ET AL: "Remaining issues for BWP", 3GPP DRAFT; R2-1712326 REMAINING ISSUES FOR BWP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Reno, USA; 20171127 - 20171201 17 November 2017 (2017-11-17), XP051371406, Retrieved from the Internet: URL:http://www.3gpp.org/ftp/tsg%5Fran/WG2% 5FRL2/TSGR2%5F100/Docs/ [retrieved on 2017-11-17]
- ERICSSON: "Ambiguity of SUL selection for Random Access", 3GPP DRAFT; R2-1814785 - AMBIGUITY OF SUL SELECTION FOR RANDOM ACCESS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; , vol. RAN WG2, no. Chengdu, PR China; 20181008 - 20181012 28 September 2018 (2018-09-28), XP051524170, Retrieved from the Internet: URL:http://www.3gpp.org/ftp/tsg%5Fran/WG2% 5FRL2/TSGR2%5F103bis/Docs/R2%2D1814785%2Ez ip [retrieved on 2018-09-28]

## Description

### TECHNICAL FIELD

Embodiments herein relate to a User Equipment (UE), a network node and methods therein. In some aspects, they relate to obtaining a Band Width Part (BWP) for a respective Downlink (DL), first Uplink (UL1), and second Uplink (UL2) e.g. for a Random Access of the UE to a wireless communication network.

### BACKGROUND

In a typical wireless communication network, wireless devices, also known as wireless communication devices, mobile stations, stations (STA) and/or User Equipment (UE), communicate via a Local Area Network such as a Wi-Fi network or a Radio Access Network (RAN) to one or more core networks (CN). The RAN covers a geographical area which is divided into service areas or cell areas, which may also be referred to as a beam or a beam group, with each service area or cell area being served by a radio network node such as a radio access node e.g., a Wi-Fi access point or a radio base station (RBS), which in some networks may also be denoted, for example, a NodeB, eNodeB (eNB), or gNB as denoted in 5G. A service area or cell area is a geographical area where radio coverage is provided by the radio network node. The radio network node communicates over an air interface operating on radio frequencies with the wireless device within range of the radio network node.

Specifications for the Evolved Packet System (EPS), also called a Fourth Generation (4G) network, have been completed within the 3rd Generation Partnership Project (3GPP) and this work continues in the coming 3GPP releases, for example to specify a Fifth Generation (5G) network also referred to as 5G New Radio (NR). The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs used in 3G networks. In general, in E-UTRAN/LTE the functions of a 3G RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted the X2 interface.

Multi-antenna techniques may significantly increase the data rates and reliability of a wireless communication system. The performance is in particular improved if both the transmitter and the receiver are equipped with multiple antennas, which results in a Multiple-Input Multiple-Output (MIMO) communication channel. Such systems and/or related techniques are commonly referred to as MIMO.

The evolving 5G standard New Radio (NR) may be aiming to operate in a wide range of frequencies from below 1 GHz up to 100 GHz. In such a frequency range, the random access procedure in NR may be improved to mitigate the potential propagation losses at high frequency carriers.

For NR, there is an ongoing discussion in the 3gpp standardization on the use of Band Width Parts (BWPs). The reasons for using BWPs are that some UEs might not be able to use the entire BW, in which case they are assigned a smaller BWP which they are capable of handling. Another reason may be for battery savings. A UE may be assigned a narrower BWP to reduce the needed energy for reception and transmission. Yet another reason may be for load balancing when the UEs do not need the entire BW to meet the bit rate requirements.

It has been agreed that each UE may be assigned with at least an initial BWP, the same for all UEs and narrow enough for all UEs to handle, and a default BWP. The default BWP may be the same as the initial BWP but may also be different, i.e. different UEs will typically have different default BWPs. In addition to initial and default BWP, the UE may be configured with additional BWPs. It has been agreed that a UE may have up to four downlink (DL)/uplink (UL) BWPs. An important agreement may also be that at any point in time, only one BWP is active for a specific UE.

In NR, a Supplementary Uplink (SUL) may also be configured. The SUL typically operates on a lower frequency and has a narrower bandwidth, than a Normal Uplink (NUL). The SUL may also be configured with BWPs in the same way as a NUL. In the

current specification the NUL BWP and SUL BWP configurations are independent, i.e. the number of BWPs and their configurations may be different for NUL and SUL.

The UE may be configured with BWPs using Radio Resource Control (RRC) signaling (except the initial) and switching between BWPs may be done by Downlink Control Information (DCI) on the Physical Downlink Control Channel (PDCCH) which instructs the UE to switch BWP. There may also be a possibility to switch to the default BWP when a *bwp-lnactivityTimer* expires or when Random Access is initiated.

A BWP may also be configured with Physical Random Access Channel (PRACH) occasions, allowing the UE to initiate a Random Access procedure on the BWP. A **PRACH occasion** when used herein means a time and frequency where the PRACH preamble may transmitted. The PRACH occasions are configured by the *RACH-ConfigGeneric* IE by the parameters prach-Configurationlndex, msg1-FDM and msg1-FrequencyStart. The configuration of PRACH occasions on a BWP may not be mandatory except on the initial BWP, where it may always be present to allow initial access. Also for Physical Uplink Control Channel (PUCCH) a BWP may or may not have PUCCH resources configured. The reason for not having a PUCCH configured is that it may occupy resources which may lead to overhead, especially in configured but not active BWPs.

### [Insert page 3a here]

### SUMMARY

An object of embodiments herein is to improve the way of handling BWP a wireless communications network.

According to an aspect of embodiments herein, the object is achieved by a method performed by a User Equipment, UE, for obtaining a Band Width Part, BWP, for a respective Downlink, DL, first Uplink, UL1, and second Uplink, UL2, for a Random Access of the User Equipment, UE, to a wireless communication network, as defined in claim 1. When it is assumed that for every UL1 BWP with Physical Random Access Channel, PRACH, occasions, there is a corresponding UL2 BWP with PRACH occasions that has the same band width part identity, bwp id, the UE obtains an UL1 BWP with PRACH occasions comprising a first bwp id and a DL BWP with the same first bwp id, and

In 3GPP DRAFT R2-1812950 from ZTE et al is described a method for how to select the Band Width Part, BWP for Normal Uplink, NUL and Supplementary Uplink, SUL. In R2-1812950 it is proposed to select the NUL and SUL first and to switch the DL BWP afterwards. Similar methods could also be found in 3GPP TS38.321 vl5.2.0. after the UL1 BWP and DL BWP have been obtained, the UE obtains an UL2 BWP with PRACH occasions comprising the same first bwp id.

Else, the UE performs any one out of:
- When there is a UL1 BWP and UL2 BWP with PRACH occasions with a common first bwp id, the UE selects these UL1 BWP and UL2 BWP, and selects a DL BWP comprising the same first bwp id, and
- when there is no UL1 BWP and UL2 BWP with PRACH occasions with a common first bwp id, the UE selects an initial BWP for each of the respective UL1, UL2 and DL, which UL1 BWP, UL2 BWP and DL BWP thereby comprises the same first bwp id.

According to a further aspect of embodiments herein, the object is achieved by a method performed by a network node for configuring a User Equipment, UE, to obtain a Band Width Part, BWP, for a respective Downlink, DL, first Uplink, UL1, and second Uplink, UL2, for a Random Access of the User Equipment, UE, to a wireless communication network, as defined in claim 7. The network node configures the UE for when It is assumed that for every UL1 BWP with Physical Random Access Channel, PRACH, occasions, there is a corresponding UL2 BWP with PRACH occasions that has the same band width part identity, bwp id, obtaining an UL1 BWP with PRACH occasions comprising a first bwp id and a DL BWP with the same first bwp id, and after the UL1 BWP and DL BWP have been obtained, obtaining an UL2 BWP with PRACH occasions comprising the same first bwp id, else, performing any one out of:
- when there is a UL1 BWP and UL2 BWP with PRACH occasions with a common first bwp id, selecting these UL1 BWP and UL2 BWP, and selecting a DL BWP comprising the same first bwp id,
when there is no UL1 BWP and UL2 BWP with PRACH occasions with a common first bwp id, selecting an initial BWP for each of the respective UL1, UL2 and DL, which UL1 BWP, UL2 BWP and DL BWP thereby comprises the same first bwp id.

According to an aspect of embodiments herein, the object is achieved by a User Equipment, UE, configured for obtaining a Band Width Part, BWP, for a respective Downlink, DL, first Uplink, UL1, and second Uplink, UL2, for a Random Access of the User Equipment, UE, to a wireless communication network, as defined in claim 12. The UE is configured to:
when it is assumed that for every UL1 BWP with Physical Random Access Channel, PRACH, occasions, there is a corresponding UL2 BWP with PRACH occasions that has the same band width part identity, bwp id, obtain an UL1 BWP with PRACH occasions adapted to comprise a first bwp id and a DL BWP with the same first bwp id, and after the UL1 BWP and DL BWP have been obtained, obtain an UL2 BWP with PRACH occasions adapted to comprise the same first bwp id,
else, perform any one out of:
   - when there is a UL1 BWP and UL2 BWP with PRACH occasions with a common first bwp id, select, these UL1 BWP and UL2 BWP, and select a DL BWP comprising a same first bwp id,
   - when there is no UL1 BWP and UL2 BWP with PRACH occasions with a common first bwp id, select an initial BWP for each of the respective UL1, UL2 and DL, which UL1 BWP, UL2 BWP and DL BWP thereby is adapted to comprise a same first bwp id.

According to a further aspect of embodiments herein, the object is achieved by a network node for configuring a User Equipment, UE, to obtain a Band Width Part, BWP, for a respective Downlink, DL, first Uplink, UL1, and second Uplink, UL2, for a Random Access of the User Equipment, UE, to a wireless communication network, as defined in claim 15.The network node is adapted to configure the UE to:
when
it is assumed that for every UL1 BWP with Physical Random Access Channel, PRACH, occasions, there is a corresponding UL2 BWP with PRACH occasions that has the same band width part identity, bwp id, obtain, an UL1 BWP with PRACH occasions adapted to comprise a first bwp id and a DL BWP with the same first bwp id, and after the UL1 BWP and DL BWP have been obtained, obtain an UL2 BWP with PRACH occasions comprising the same first bwp id,
else, perform any one out of:
   - when there is a UL1 BWP and UL2 BWP with PRACH occasions with a common first bwp id, select these UL1 BWP and UL2 BWP, and select a DL BWP adapted to comprise the same first bwp id,
   - when there is no UL1 BWP and UL2 BWP with PRACH occasions with a common first bwp id, select an initial BWP for each of the respective UL1, UL2 and DL, which UL1 BWP, UL2 BWP and DL BWP thereby being adapted to comprise the same first bwp id.

### BRIEF DESCRIPTION OF THE FIGURES

- **Figure 1**: is a schematic block diagram illustrating embodiments of a wireless communications network.
- **Figure 2**: a and b are flowcharts depicting embodiments of a method in a UE.
- **Figure 3**: is a flowchart depicting embodiments of a method in a network node.
- **Figure 4**: a and b are schematic block diagrams of embodiments herein.
- **Figure 5**: a and b are schematic block diagrams of embodiments herein.
- **Figure** 6: a and b are schematic block diagrams of embodiments herein.
- **Figure 7**: a and b are schematic block diagrams of embodiments herein.
- **Figure 8**: a and b are schematic block diagrams illustrating embodiments of a UE..
- **Figure 9**: a and b are schematic block diagrams illustrating embodiments of a network node.
- **Figure 10**: schematically illustrates a telecommunication network connected via an intermediate network to a host computer.
- **Figure 11**: is a generalized block diagram of a host computer communicating via a base station with a user equipment over a partially wireless connection.
- **Figures 12-15**: are flowcharts illustrating methods implemented in a communication system including a host computer, a base station and a user equipment.

### DETAILED DESCRIPTION

As a part of developing embodiments herein the inventors identified a problem which first will be discussed.

When a UE initiates a Random Access procedure, it may first ensure that the active BWP contains PRACH occasions and that the DL BWP has the same bwp-id as the active UL BWP. This is specified in 3GPP 38.321 v15.2.0 in Section 5.15 BWP Operation according to:

"Upon initiation of the Random Access procedure on a Serving Cell, the MAC entity shall for this Serving Cell:

```
 1> if PRACH occasions are not configured for the active UL BWP:
      2> switch the active UL BWP to BWP indicated by initialUplinkBWP;
      2> if the Serving Cell is a SpCell:
                 3> switch the active DL BWP to BWP indicated by
                 initialDownlinkBWP.
 1> else:
      2> if the Serving Cell is a SpCell:
                 3> if the active DL BWP does not have the same bwp-Id as the
                 active UL BWP:
                            4> switch the active DL BWP to the DL BWP
                            with the same bwp-Id as the active UL BWP.
 1> perform the Random Access procedure on the active DL BWP of SpCell and active UL BWP
 of this Serving Cell."
```

When performing Random access, also a selection of NUL or SUL may be done. This is described in Section 5.1.1, Initiation of Random Access procedure according to:

```
 "1> if the carrier to use for the Random Access procedure is explicitly signalled:
      2> select the signalled carrier for performing Random Access procedure;
      2> set the PCMAX to PCMAX,f,c of the signalled carrier.
 1> else if the carrier to use for the Random Access procedure is not explicitly signalled; and
 1> if the Serving Cell for the Random Access procedure is configured with supplementaryUplink;
 and
 1> if the RSRP of the downlink pathloss reference is less than rsrp-ThresholdSSB-SUL:
      2> select the SUL carrier for performing Random Access procedure;
      2> set the PCMAX to PCMAX,f,c of the SUL carrier.
 1> else:
      2> select the NUL carrier for performing Random Access procedure;
      2> set the PCMAX to PCMAX,f,c of the NUL carrier."
```

The reason why the UL BWP and the DL BWP may need to be the same, i.e. having the same bwp id, are that when the UE sends a preamble on an UL BWP with bwp id = k, the network responds with a Random Access Response (RAR) message on a DL BWP with bwp id = k. This means that the UL BWP and the DL BWP need to be the same since otherwise the UE will look for the RAR on the wrong BWP.

If the preamble is sent on the initial UL BWP, the network responds with a Random Access Response (RAR) message on the initial DL BWP.

If there would be a mismatch between UL BWPs and DL BWPs, it may not be guaranteed that the RAR would be received by the UE. This is since at any point in time, the UE will have one active UL BWP and one active DL BWP. The UE will only transmit and receive on the active BWP. Each UL BWP and DL BWP have bwp ids and it has been specified that the RAR will be sent on the DL BWP which has the same BWP id as the UL BWP where the PRACH preamble was sent.

An open issue raised in *"R2-1812950, Considering on the RA triggered BWP switch in* case *SUL is configured, ZTE, Sanechips, 3GPP TSG-RAN WG2 Meeting #103, 20th* - *24th August 2018",* is that it is not clearly described how the BWP switch is carried out if both NUL and SUL are configured to be switched. The solution proposed in *"R2-1812950, Considering on the RA triggered BWP switch in case SUL is configured, ZTE, Sanechips, 3GPP TSG-RAN WG2 Meeting #103, 20th* - *24th August 2018"* is to do the NUL/SUL selection first and herby only need to consider the selected carrier when doing the BWP switch.

If the BWP switch is carried out prior to selecting the NUL/SUL, the BWPs on both carriers as well as the DL BWP may need to be switched to the same bwp-id. Thereby the need to perform a new switch after selecting the NUL/SUL may be avoided (since the DL bwp id must match the UL BWP). A problem is that how to do this, considering that both the configured BWPs (and whether they contain PRACH occasions) and the active BWPs can be different between SUL and NUL is not clear.

An object of embodiments herein may therefore be to improve the way of handling BWP when a UE is configured with both NUL and SUL in a UE in a wireless communications network.

Example embodiments herein e.g. relate to methods to address the issue of BWP switching when both the NUL and the SUL are configured. According to embodiments herein, different switching schemes are described depending on what assumptions may be made on the BWP configurations on the NUL and SUL carriers. In embodiments herein, it may be assumed that if a BWP has PRACH occasions configured (irrespective of NUL or SUL), there is a DL BWP with the same bwp id. For the UL BWP configurations, the main assumption may be that if there is a NUL BWP with PRACH occasions, there is a corresponding BWP with PRACH occasion on the SUL with the same bwp id.

An advantage of embodiments herein is that efficient switching of BWPs is provided when both the NUL and the SUL are configured such that both the NUL and the SUL have the same bwp-id, have PRACH occasions and that the DL BWP is on the same bwp-id.

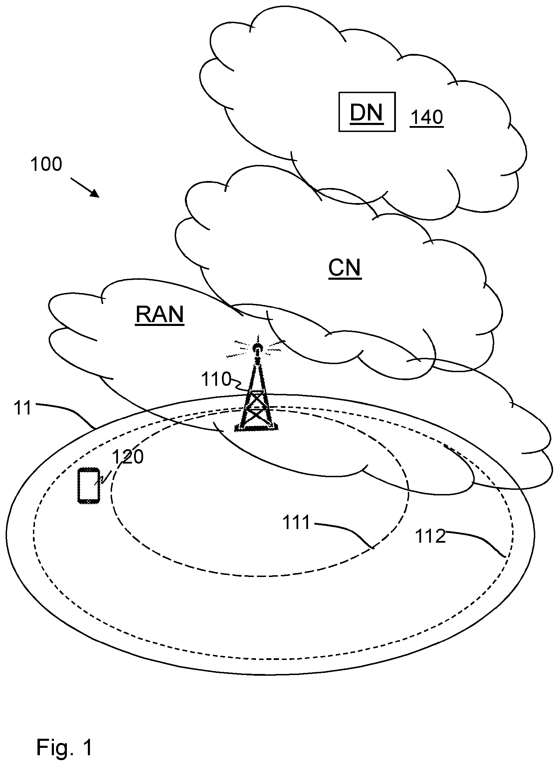

Embodiments herein relate to wireless communication networks in general. Figure 1 is a schematic overview depicting a wireless communications network 100. The wireless communications network 100 comprises one or more RANs and one or more CNs. The wireless communications network 100 may use NR but may further use a number of other different technologies, such as, 5G, NB-IoT, CAT-M, Wi-Fi, eMTC, Long Term Evolution (LTE), LTE-Advanced Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations.

Network nodes operate in the wireless communications network 100, such as a **network node 110,** providing radio coverage over a geographical area, **a cell 11.** The cell 11 may also be referred to as a service area, beam or a group of beams multiple TRPs, or multiple BWPs. The cell 11 is configured with multiple UL carries such as multiple beams, multiple TRPs, or multiple BWPs. E.g. an NR cell configured with both a SUL carrier and an NR UL carrier. The cell 11 comprises at least a first UL carrier (UL1) and a second UL (UL2) carrier, wherein the first UL carrier **UL1** may be **a NUL carrier 111** and the second UL carrier **UL2** may be **a SUL carrier 112.** It may also be the other way around wherein the second UL carrier **UL2** may be **a NUL carrier 111** and the first UL carrier **UL1** may be **a SUL carrier 112.** The SUL carrier may e.g. be associated with the NR UL carrier, i.e., the NR UL carrier may be the carrier that the SUL carrier provides extended UL coverage towards.

The network node 110 may be a transmission and reception point e.g. a radio access network node such as a base station, e.g. a radio base station such as a NodeB, an evolved Node B (eNB, eNode B), an NR Node B (gNB), a base transceiver station, a radio remote unit, an Access Point Base Station, a base station router, a transmission arrangement of a radio base station, a stand-alone access point, a Wireless Local Area Network (WLAN) access point or an Access Point Station (AP STA), an access controller, or any other network unit capable of communicating with a UE within the cell 11 served by the network node 110 depending e.g. on the radio access technology and terminology used. The network node 110 may be referred to as a serving radio network node and communicates with a UE 120 with Downlink (DL) transmissions to the UE 120 and Uplink (UL) transmissions from the UE 120.

Wireless devices such as e.g. a **UE 120** operate in the wireless communications network 100. The UE 120 may e.g. be an NR device a mobile station, a wireless terminal, an NB-loT device, an eMTC device, a CAT-M device, a WiFi device, an LTE device and an a non-access point (non-AP) STA, a STA, that communicates via a base station such as e.g. the network node 110, one or more Access Networks (AN), e.g. RAN, to one or more core networks (CN). It should be understood by the skilled in the art that "UE" is a non-limiting term which means any terminal, wireless communication terminal, user equipment, Device to Device (D2D) terminal, or node e.g. smart phone, laptop, mobile phone, sensor, relay, mobile tablets or even a small base station communicating within a cell.

Methods according to embodiments herein may be performed by the UE 120 or by the network node 110. As an alternative, a Distributed Node DN and functionality, e.g. comprised in **a cloud 140** as shown in Figure 1 may be used for performing or partly performing the methods.

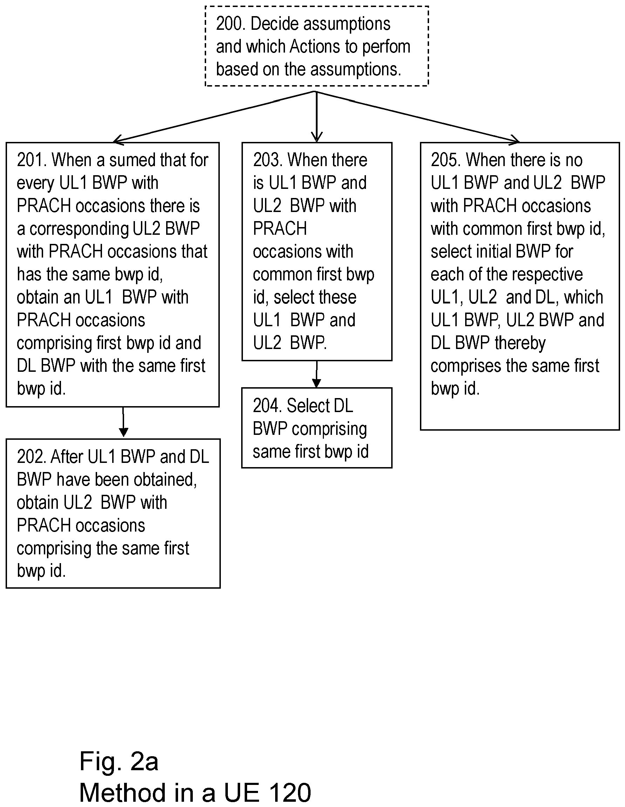

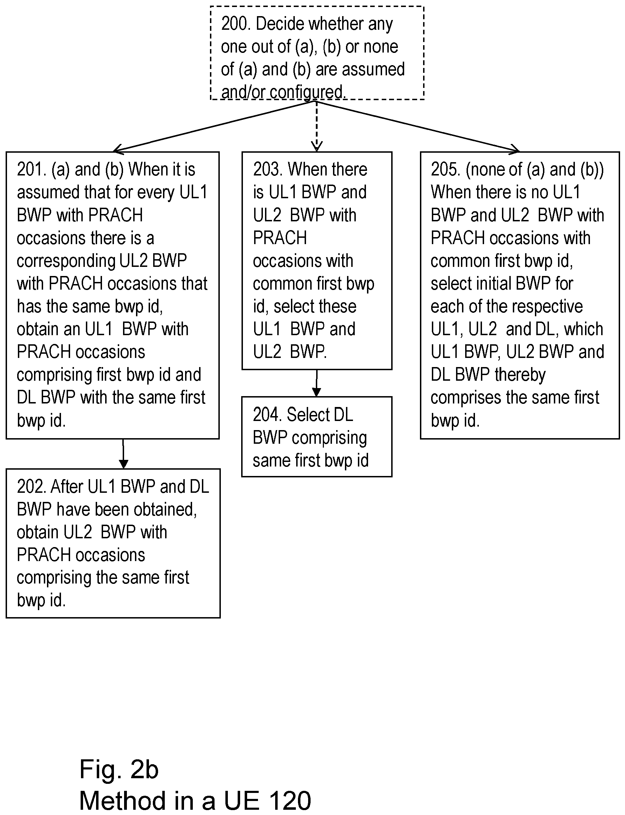

**Figures 2** **a and b** show an example method performed by the UE 120 e.g. for obtaining a BWP for a respective DL, first Uplink (UL1), and second Uplink (UL2) e.g. for a Random Access of the UE 120 to the wireless communication network 100. The method may comprise any of the actions below:
According to embodiments herein, different switching schemes will be performed depending on what assumptions that are made on the BWP configurations on the UL1 such as e.g. NUL and UL2 such as e.g. SUL carriers. This is to provide efficient switching of BWPs is provided when both the UL1 such as e.g. NUL and the UL2 such as e.g. SUL are configured such that both the NUL and the SUL have the same bwp-id, have PRACH occasions and that the DL BWP is on the same bwp-id.

In optional **Action 200a** shown in **Figure 2a****,** the UE 120 decides which actions the UE 120 shall perform based on what assumptions may be made on the BWP configurations on the UL1 and UL2 such as the NUL and SUL carriers.

When it is assumed that for every UL1 BWP with PRACH occasions, there is a corresponding UL2 BWP with PRACH occasions that has the same bwp id, the UE 120 decides that Actions **201** and **202** below shall be performed.

When there is a UL1 BWP and UL2 BWP with PRACH occasions with a common first bwp id, the UE 120 decides that Actions **203** and **204** below shall be performed.

When there is no UL1 BWP and UL2 BWP with PRACH occasions with a common first bwp id, the UE 120 decides that **Action 205** below shall be performed.

In optional **Action 200b** shown in **Figure 2b****,** the UE 120 may decide whether any one out of (a), (b) or none of (a) and (b) are assumed. As an alternative, the UE 120 may be configured, e.g. by the network node 110, according to any of **(a)** and **(b)..**

In **(a)** it is assumed that or configured with for every UL1 such as e.g. NUL BWP with PRACH occasions, there is a corresponding BWP with the same band width part identity (bwp id), on UL2 such as e.g. SUL with Physical Random Access Channel (PRACH), occasions.

In **(b)** it is assumed that or configured with for every UL2 such as e.g. SUL BWP with PRACH occasions, there is a corresponding BWP with the same band width part identity, bwp, id, on UL1 such as e.g. NUL with PRACH occasions.

When **(a)** is assumed or configured, the UE 120 performs a switching scheme of BWP for any of the UL1 such as e.g. NUL, UL2 such as e.g. SUL and DL for Random Access according to a **first rule** e.g. comprising such as relating to Actions 201 and 202.

When **(b)** is assumed or configured, the UE 120 performs switching of BWP for any of the UL1 such as e.g. NUL, UL2 such as e.g. SUL and DL for Random Access according to a **second rule** e.g. comprising such as relating to Actions 201 and 202.

When none of **(a)** and **(b)** is assumed or configured, the UE 120 performs switching of BMP for any of the UL1 such as e.g. NUL, UL2 such as e.g. SUL and DL for Random Access according to a **third rule** e.g. comprising Action 205.

The below actions are shown in both Figure 2a and 2b.

**Action 201.** When it is assumed that for every UL1 BWP with PRACH occasions, there is a corresponding UL2 BWP with PRACH occasions that has the same bwp id the UE 120 obtains, e.g. remains or switches to, an **UL1** BWP with PRACH occasions comprising a **first bwp id** and a **DL** BWP with the same **first bwp id.** In some embodiments, the UE 120 may obtain the UL1 BWP with PRACH occasions by remaining on an active BWP or switching to an initial BWP.

**Action 202.** After the UL1 BWP and DL BWP have been obtained, the UE 120 obtains, e.g. remains or switches to, an **UL2** BWP with PRACH occasions comprising the same **first bwp id.** In this way an efficient switching of BWPs is provided wherein both the UL1 and the UL2 are configured such that both the UL1 and the UL2 have the same bwp-id, have PRACH occasions and that the DL BWP is on the same bwp-id.

In some embodiments relating to (a), the first rule comprises:
When there is **no PRACH** in an active NUL BWP, the obtaining in **Action 201** may comprise switching the active NUL and a DL to a respective initial BWP, and after the NUL BWP and DL BWP have been switched, the obtaining in **Action 202** may comprise switching the SUL to an initial BWP, wherein the SUL, the NUL and the DL all have the same bwp id.

When there **is a PRACH** in an active NUL BWP the obtaining in **Action 201** may comprise switching the DL to a BWP having the same bwp id as the active NUL BWP, and after the DL BWP have been switched, the obtaining in **Action 202** may comprise switching the SUL to a BWP having the same bwp id as the active NUL BWP, wherein the SUL, the NUL and the DL all have the same bwp id.

In some embodiments relating to (b), the second rule comprises:
When there is **no PRACH** in an active SUL BWP, the obtaining in **Action 201** (201) comprises switching the active SUL and a DL to a respective initial BWP, and after the SUL BWP and DL BWP have been switched, obtaining (202) comprises switching the NUL to an initial BWP, wherein the SUL, the NUL and the DL all have the same bwp id,
when there **is a PRACH** in an active SUL BWP, obtaining (201) comprises switching the DL to a BWP having the same bwp id as the active SUL BWP, and after the DL BWP have been switched, obtaining (202) comprises switching (209b) the NUL to a BWP having the same bwp id as the active SUL BWP, wherein the SUL, the NUL and the DL all have the same bwp id.

**Action 203.** When there is a **UL1** BWP and **UL2** BWP with PRACH occasions with a common first bwp id, the UE 120 selects these UL1 BWP and UL2 BWP.

**Action 204.** Thereafter the UE 120 also selects a **DL** BWP comprising the **same first bwp id.** Also in this way an efficient switching of BWPs is provided wherein both the UL1 and the UL2 are configured such that both the UL1 and the UL2 have the same bwp-id, have PRACH occasions and that the DL BWP is on the same bwp-id.

**Action 205.** When there is **no** UL1 BWP and UL2 BWP with PRACH occasions with a common first bwp id, none of **(a)** and **(b),** the UE 120 selects an initial BWP for each of the respective UL1, UL2 and DL. Thereby the UL1 BWP, UL2 BWP and DL BWP comprise the same first bwp id. This relates to the third rule. Thus also in this way, an efficient switching of BWPs is provided wherein both the UL1 and the UL2 are configured such that both the UL1 and the UL2 have the same bwp-id, have PRACH occasions and that the DL BWP is on the same bwp-id.

In some embodiments, UL1 is represented by a Normal Uplink (NUL) and UL2 is represented by a Supplementary Uplink (SUL).

In some other embodiments, UL2 is represented by a NUL and UL1 is represented by a SUL.

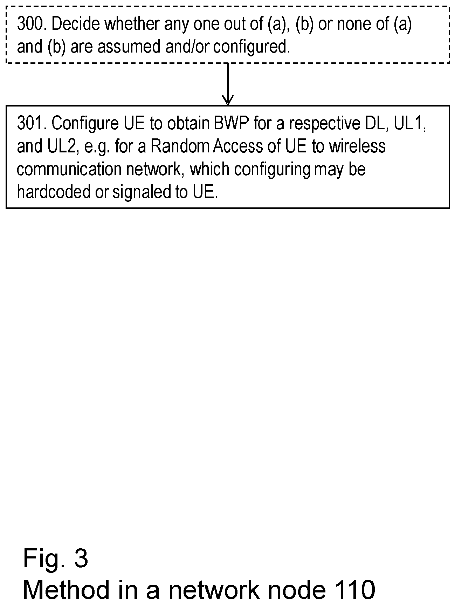

**Figure 3** shows an example method performed by a network node 110 for configuring a UE 120 to obtain a BWP for a respective DL, UL1, and UL2, e.g. for a Random Access of a UE 120 to a wireless communication network 100. The configuring may e.g. be hardcoded or signalled to the UE 120. The method may comprise the action below.

In **Action 300,** the network node 110 may decide whether any one out of (a), (b) or none of (a) and (b) are assumed and/or configured.

In **Action 301,** the network node 110 configures the UE 120 to obtain a BWP for a respective DL, UL1, and UL2 according to any one or more out of the method Actions 200-205 above, e.g. for a Random Access of a UE 120 to a wireless communication network 100, which configuring may be hardcoded or signalled to the UE 120.

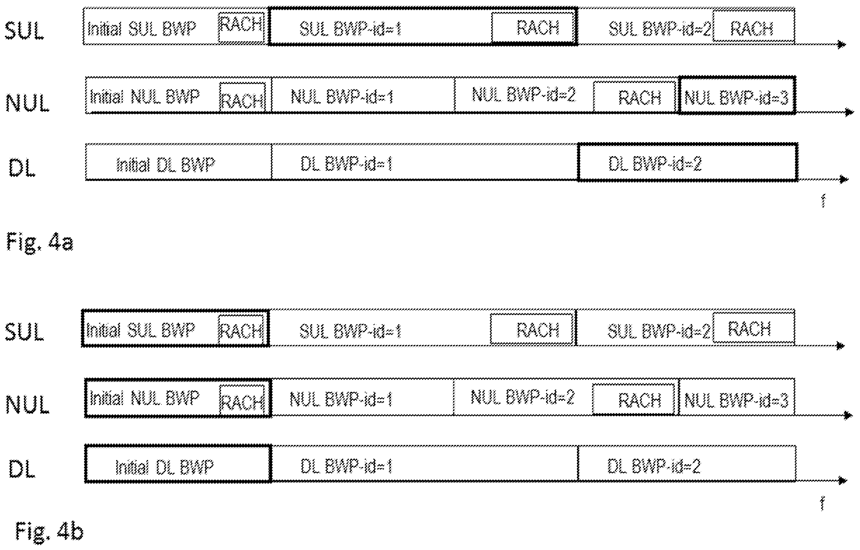

The examples below, as illustrated **in** **Figures 4a, 4b****,** **5a, 5b****,** **6a, 6b****,** **7a, 7b****,** comprise scheduling schemes comprising switching of BMP for any of the NUL, SUL and DL for Random Access. **Figures 4a****,** **5a****,** **6a****, and** **7a** illustrate a respective scenario **before the switching** of the BWPs and **Figures 4b****,** **5b****,** **6b** **and** **7b** illustrate a respective scenario **after the switching.**

In the Figures 4a, 4b, 5a, 5b, 6a, 6b, 7a, and 7b, the diagonal striped boxes indicate that the BWP for any of the NUL, SUL and DL is active. Dotted boxes marked with RACH indicate that the NUL and/or SUL have PRACH occasions.

There are multiple embodiments described below to explain the details of embodiments herein.

In the examples below, according to some other embodiments, NUL is represented by a first UL (UL1), and SUL is represented by a second UL (UL2).

In some other embodiments NUL is represented by a second UL (UL2) and SUL is represented by a first UL (UL1).

In some first embodiments, it is assumed that for every NUL BWP with PRACH occasions, there is a corresponding BWP with the same bwp id on SUL with PRACH occasions. This is illustrated in **Figures 4a and 4b.** Figure 4a illustrates the switching scheme before the switching of the BWPs and Figure 4b illustrates the switching scheme after the switching. This relates to Actions 201 and 202.

In some of the first embodiments, the UE 120 decides that the BWP switch shall be carried out according to 3GPP 38.321 v15.2.0, Section 5.15 "Bandwidth Part Operation", for the NUL carrier.

Before the switching the NUL BWP with bwp-id =3 is active with no PRACH occasion. See Figure 4a. Further, the SUL BWP with bwp-id #1 is active with a PRACH occasion and the DL BWP with bwp-id =2 is active.

In the example this means that the NUL BWP and the DL BWP is switched to the Initial BWP since there is no PRACH in the active NUL BWP. See Figure 4b. According to embodiments herein, after the NUL and DL BWPs have been switched, the SUL is also switched to this BWP. With the current assumptions, the switching scheme guarantees that both NUL and SUL have the same bwp-id and have PRACH occasions and that the DL BWP is on the same bwp-id.

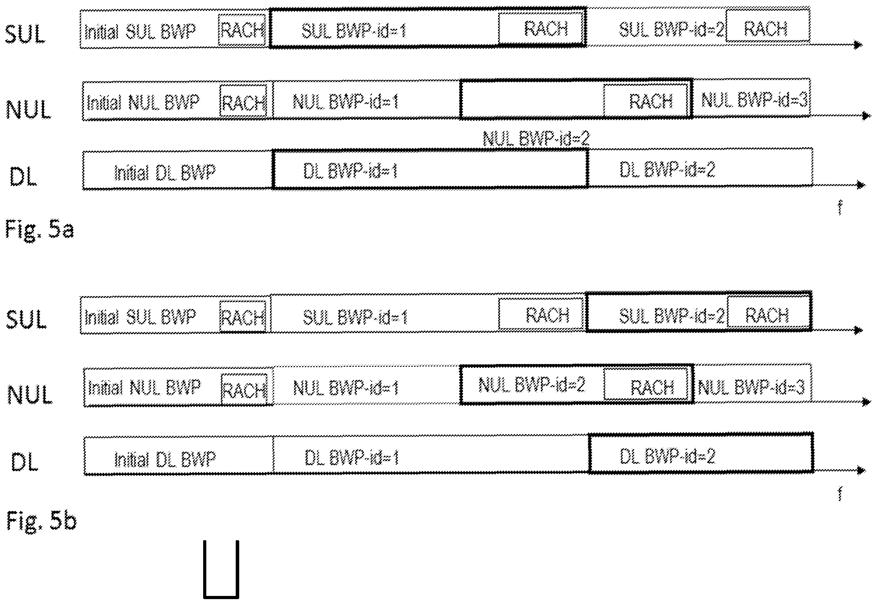

**Figure 5a and 5b** shows another example of the first embodiments with the same assumptions, i.e. the active BWP on NUL is bwp-id 2 which has RACH, i.e. PRACH occasions. Before the switching the NUL BWP with bwp-id =2 is active with a PRACH occasion. See Figure 5a. Further, the SUL BWP with bwp-id =1 is active with a PRACH occasion and the DL BWP with bwp-id =1 is active.

In this case no switch of NUL is needed but the DL BWP is switched to the same bwp-id, i.e. bwp-id =2 as the NUL. After this, also the SUL is switched to bwp-id 2 to match the NUL carrier. Figure 5a illustrates the switching scheme before the switching of the BWPs and Figure 5b illustrates the switching scheme after the switching. This also relates to Actions 201 and 202.

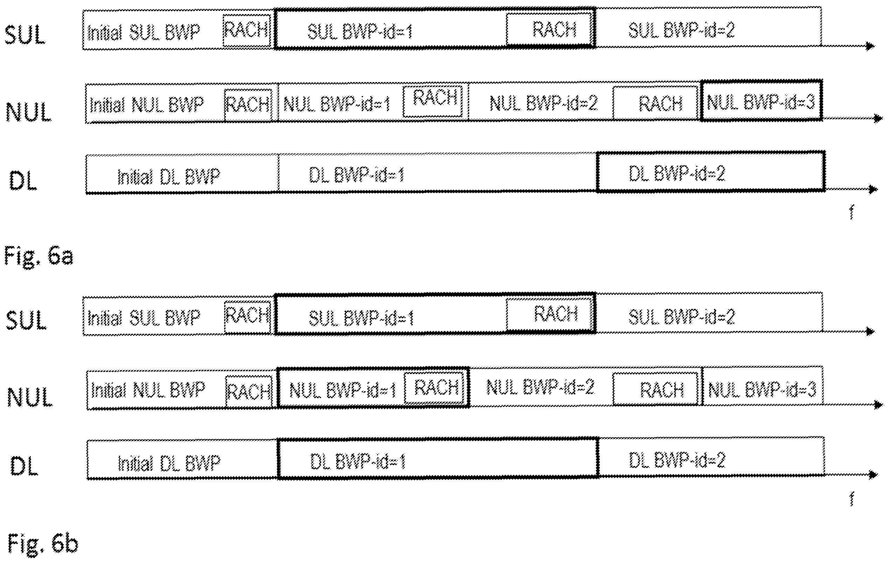

In some second embodiments, it is assumed that for every SUL BWP with PRACH occasions, there is a corresponding BWP with the same bwp id on NUL with PRACH occasions. This is illustrated in **Figure 6a and 6b.** Figure 6a illustrates the switching scheme before the switching of the BWPs and Figure 6b illustrates the switching scheme after the switching.

In some of the second embodiments, the BWP switch is carried out according to 3GPP 38.321 v15.2.0, Section 5.15 "Bandwidth Part Operation", for the SUL carrier.

Before the switching the NUL BWP with bwp-id =3 is active with no PRACH occasion. See Figure 6a. Further, the SUL BWP with bwp-id =1 is active with a PRACH occasion and the DL BWP with bwp-id =2 is active.

In the example this means that the SUL remains at its active BWP and the DL BWP is switched to the BWP with bwp id = 1. According to embodiments herein, after the SUL and DL BWPs have been switched, the NUL is also switched to this BWP with bwp id=1. With the current assumptions, the switching scheme guarantees that both NUL and SUL have the same bwp-id and have PRACH occasions and that the DL BWP is on the same bwp-id. This also relates to Actions 201 and 202.

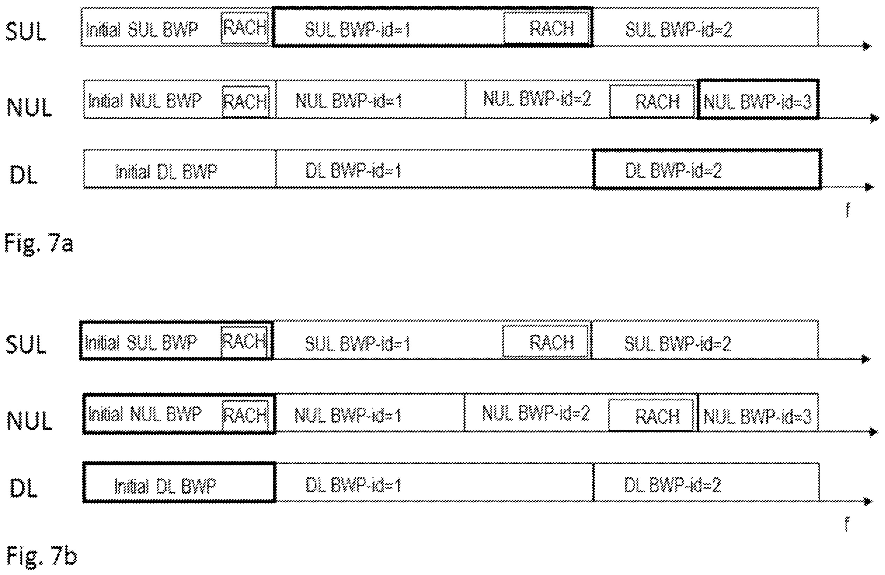

According to some third embodiments, illustrated in **Figures 7a and 7b****,** no assumption is made on BWP and PRACH configurations of NUL and SUL except what is mandated in the standard. I.e. there is always an initial BWP with PRACH occasions. Figure 7a and 7b illustrate an example where no assumption is made on PRACH configurations on NUL and SUL except that there is PRACH occasions on the initial BWPs, where Figure 7a shows the switching scheme before the switching of the BWPs and Figure 7b shows the switching scheme after the switching. Before the switching the NUL BWP with bwp-id =3 is active with no PRACH occasion. See Figure 4a. Further, the SUL BWP with bwp-id #1 is active with a PRACH occasion and the DL BWP with bwp-id =2 is active. After switching all NUL BWP, SUL BWP and DL BWP are switched to initial BWPs. This also relates to Actions 205.

In some of the third embodiments, a first check may be done if there is any common bwp id, except the initial BWP, where both NUL and SUL have PRACH occasions.

If there is only one common BWP with PRACH occasions on both NUL and SUL, this BWP is selected.

If there is more than one common BWP with PRACH occasions on both NUL and SUL, the selection of BWP may be performed according to one of the following:
- The lowest common bwp id with PRACH occasions on NUL.
- The lowest common bwp id with PRACH occasions on SUL.
- The active BWP on NUL if this is a common bwp id with PRACH occasions.
- The active BWP on SUL if this is a common bwp id with PRACH occasions.

If there is no common BWP with PRACH occasions on both NUL and SUL switch to the initial BWP as depicted in Figure 7b.

Once the UL BWPs have been selected according to the above, switching the DL BWP to the selected bwp-id is performed.

This switching scheme according to embodiments herein may guarantee that both the NUL and the SUL have the same bwp-id and that they have PRACH occasions and that the DL BWP is on the same bwp-id.

The network node 110 may configure the BWP such that for each NUL BWP with PRACH occasion comprising a bwp id there is a corresponding SUL BWP with PRACH occasion comprising the same bwp id.

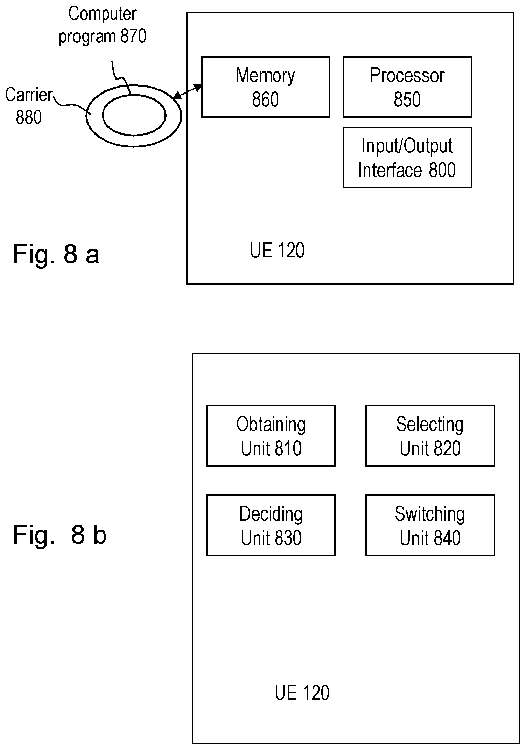

**Figure 8a** and **8b** shows an example of arrangements in the UE 120.

The UE 120 may comprise **an input and output interface 800** configured to communicate with each other. The input and output interface may comprise a wireless receiver (not shown) and a wireless transmitter (not shown).

The UE 120 may comprise an **obtaining unit 810,** a **selecting unit 820,** a **deciding unit 830** and a **switching unit 840** to perform the method actions as described herein.

The embodiments herein may be implemented through a respective processor or one or more processors, such as the **processor 850** of a processing circuitry in the UE 120 depicted in Figure 8a, together with respective computer program code for performing the functions and actions of the embodiments herein. The program code mentioned above may also be provided as a computer program product, for instance in the form of a data carrier carrying computer program code for performing the embodiments herein when being loaded into the UE 120. One such carrier may be in the form of a CD ROM disc. It is however feasible with other data carriers such as a memory stick. The computer program code may furthermore be provided as pure program code on a server and downloaded to the UE 120.

The UE 120 may further comprise respective a **memory 860** comprising one or more memory units. The memory comprises instructions executable by the processor in the UE 120. The memory is arranged to be used to store assumptions, instructions, data, configurations, and applications to perform the methods herein when being executed in the UE 120.

In some embodiments, not covered by the present invention, a **computer program 870** comprises instructions, which when executed by the at least one processor, cause the at least one processor of the UE 120 to perform the actions above.

In some embodiments, not covered by the present invention, a respective **carrier 880** comprises the respective computer program, wherein the carrier is one of an electronic signal, an optical signal, an electromagnetic signal, a magnetic signal, an electric signal, a radio signal, a microwave signal, or a computer-readable storage medium.

Those skilled in the art will also appreciate that the functional modules in the UE 120, described below may refer to a combination of analog and digital circuits, and/or one or more processors configured with software and/or firmware, e.g. stored in the UE 120, that when executed by the respective one or more processors such as the processors described above cause the respective at least one processor to perform actions according to any of the actions above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

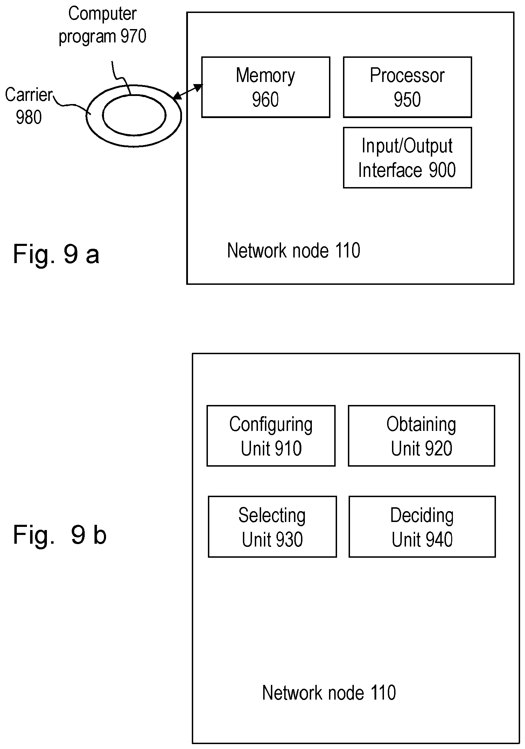

**Figure 9a** and **9b** shows an example , no claimed by the present invention, of arrangements in the network node 110.

The network node 110 may comprise **an input and output interface** 900configured to communicate with each other. The input and output interface may comprise a wireless receiver (not shown) and a wireless transmitter (not shown).

The network node 110 may comprise a **configuring unit 910,** an **obtaining unit 920,** a **selecting unit 930** and a **deciding unit 940** to perform the method actions as described herein.

The embodiments herein may be implemented through a respective processor or one or more processors, such as the **processor 950** of a processing circuitry in the network node 110 depicted in Figure 9a, together with respective computer program code for performing the functions and actions of the embodiments herein. The program code mentioned above may also be provided as a computer program product, for instance in the form of a data carrier carrying computer program code for performing the embodiments herein when being loaded into the network node 110. One such carrier may be in the form of a CD ROM disc. It is however feasible with other data carriers such as a memory stick. The computer program code may furthermore be provided as pure program code on a server and downloaded to the network node 110.

The network node 110 may further comprise respective a **memory 960** comprising one or more memory units. The memory comprises instructions executable by the processor in the network node 110.

The memory is arranged to be used to store instructions, data, configurations, and applications to perform the methods herein when being executed in the network node 110.

In some embodiments, not covered by the present invention, a **computer program 970** comprises instructions, which when executed by the at least one processor, cause the at least one processor of the network node 110 to perform the actions above.

In some embodiments, not covered by the present invention, a respective **carrier 980** comprises the respective computer program, wherein the carrier is one of an electronic signal, an optical signal, an electromagnetic signal, a magnetic signal, an electric signal, a radio signal, a microwave signal, or a computer-readable storage medium.

Those skilled in the art will also appreciate that the functional modules in the network node 110, described below may refer to a combination of analog and digital circuits, and/or one or more processors configured with software and/or firmware, e.g. stored in the network node 110, that when executed by the respective one or more processors such as the processors described above cause the respective at least one processor to perform actions according to any of the actions above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

When using the word "comprise" or "comprising" it shall be interpreted as non-limiting, i.e. meaning "consist at least of".

The embodiments herein are not limited to the above described preferred embodiments. Various alternatives, modifications may be used, without departing from the scope of the invention as defined by the appended claims.

### Further Extensions and Variations that are however not covered by the present invention

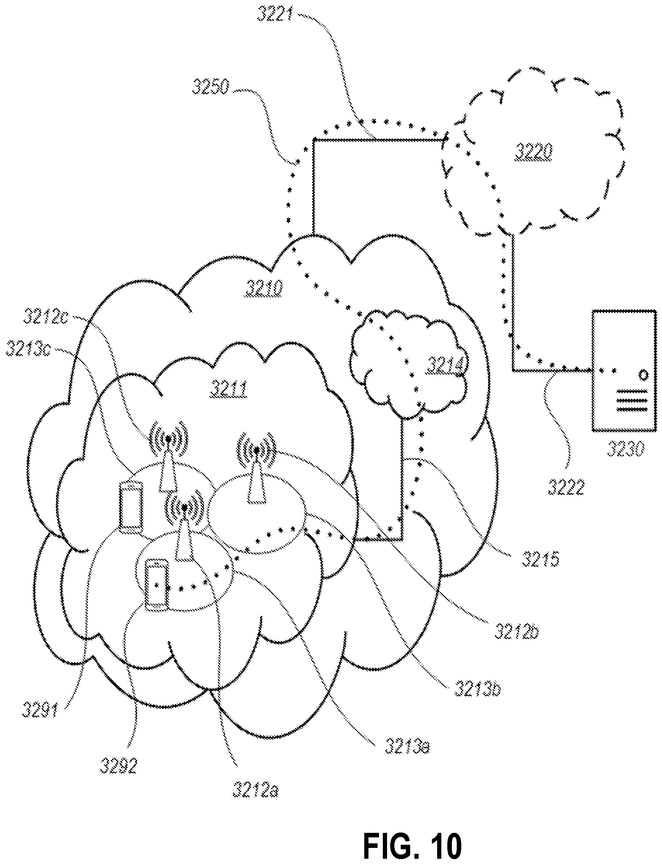

With reference to **Figure 10****,** in accordance with an embodiment, a communication system includes a telecommunication network 3210 such as the wireless communications network 100, e.g. an loT network, or a WLAN, such as a 3GPP-type cellular network, which comprises an access network 3211, such as a radio access network, and a core network 3214. The access network 3211 comprises a plurality of base stations 3212a, 3212b, 3212c, such as the network node 110, 130, access nodes, AP STAs NBs, eNBs, gNBs or other types of wireless access points, each defining a corresponding coverage area 3213a, 3213b, 3213c. Each base station 3212a, 3212b, 3212c is connectable to the core network 3214 over a wired or wireless connection 3215. A first user equipment (UE) e.g. the UE 120 such as a Non-AP STA 3291 located in coverage area 3213c is configured to wirelessly connect to, or be paged by, the corresponding base station 3212c. A second UE 3292 e.g. the wireless device 122 such as a Non-AP STA in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 10 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

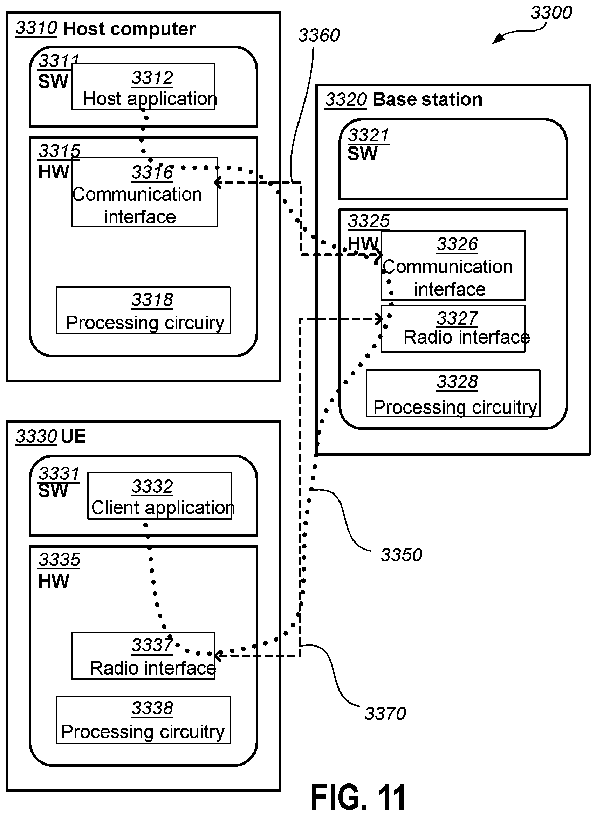

Example implementations, in accordance with an embodiment, of the UE, base station and host computer discussed in the preceding paragraphs will now be described with reference to **Figure 11****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown) served by the base station 3320. The communication interface 3326 may be configured to facilitate a connection 3360 to the host computer 3310. The connection 3360 may be direct or it may pass through a core network (not shown in Figure 11) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

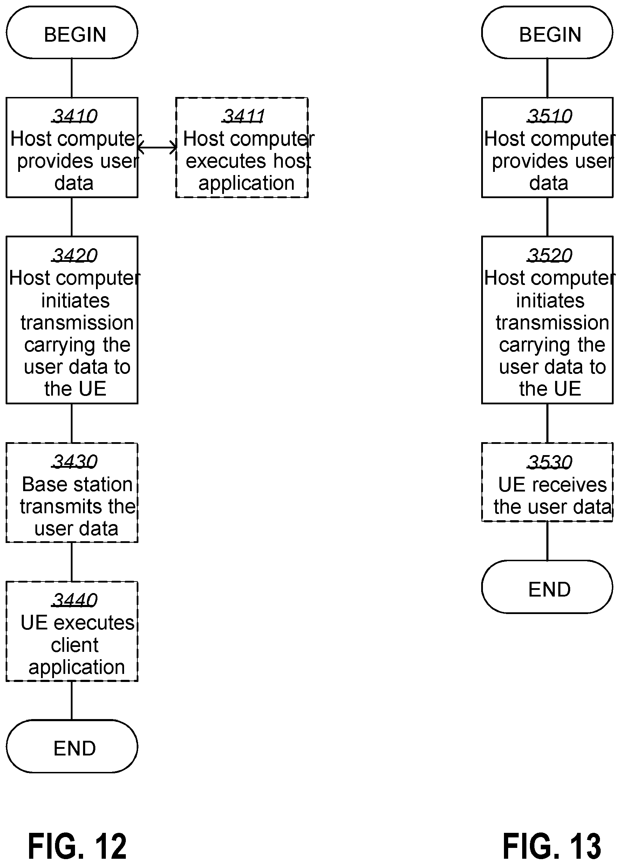

It is noted that the host computer 3310, base station 3320 and UE 3330 illustrated in Figure 11 may be identical to the host computer 3230, one of the base stations 3212a, 3212b, 3212c and one of the UEs 3291, 3292 of Figure 12, respectively. This is to say, the inner workings of these entities may be as shown in Figure 11 and independently, the surrounding network topology may be that of Figure 10.

In Figure 11, the OTT connection 3350 has been drawn abstractly to illustrate the communication between the host computer 3310 and the use equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the applicable **RAN** effect: data rate, latency, power consumption, and thereby provide benefits such as corresponding effect on the **OTT service:** e.g. reduced user waiting time, relaxed restriction on file size, better responsiveness, extended battery lifetime.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

**Figure 12** is a flowchart illustrating a method implemented in a communication system, in accordance with one embodiment. The communication system includes a host computer, a base station such as the network node 110, and a UE such as the UE 120, which may be those described with reference to Figure 10 and Figure 11. For simplicity of the present disclosure, only drawing references to Figure 12 will be included in this section. In a first action 3410 of the method, the host computer provides user data. In an optional subaction 3411 of the first action 3410, the host computer provides the user data by executing a host application. In a second action 3420, the host computer initiates a transmission carrying the user data to the UE. In an optional third action 3430, the base station transmits to the UE the user data which was carried in the transmission that the host computer initiated, in accordance with the teachings of the embodiments described throughout this disclosure. In an optional fourth action 3440, the UE executes a client application associated with the host application executed by the host computer.

**Figure 13** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 13 will be included in this section. In a first action 3510 of the method, the host computer provides user data. In an optional subaction (not shown) the host computer provides the user data by executing a host application. In a second action 3520, the host computer initiates a transmission carrying the user data to the UE. The transmission may pass via the base station, in accordance with the teachings of the embodiments described throughout this disclosure. In an optional third action 3530, the UE receives the user data carried in the transmission.

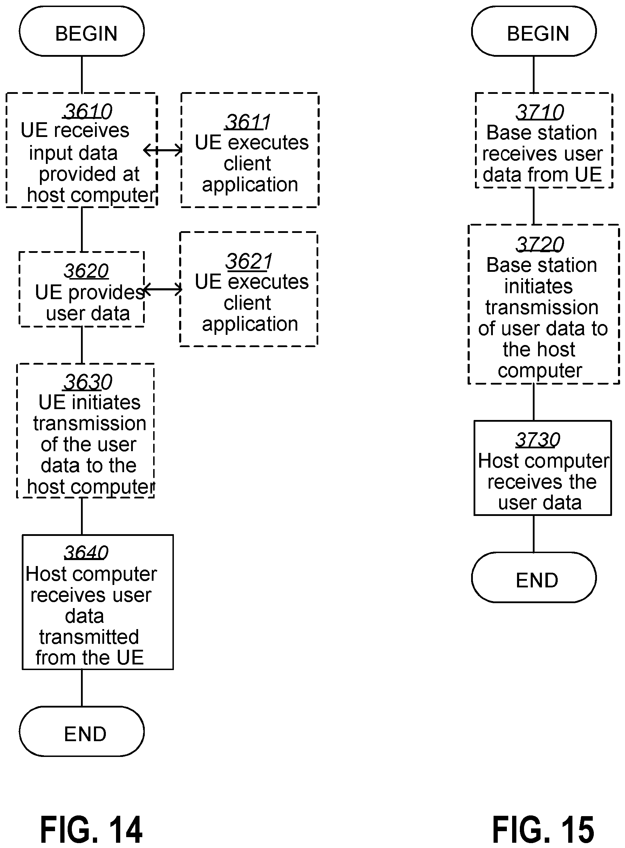

**Figure 14** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 14 will be included in this section. In an optional first action 3610 of the method, the UE receives input data provided by the host computer. Additionally or alternatively, in an optional second action 3620, the UE provides user data. In an optional subaction 3621 of the second action 3620, the UE provides the user data by executing a client application. In a further optional subaction 3611 of the first action 3610, the UE executes a client application which provides the user data in reaction to the received input data provided by the host computer. In providing the user data, the executed client application may further consider user input received from the user. Regardless of the specific manner in which the user data was provided, the UE initiates, in an optional third subaction 3630, transmission of the user data to the host computer. In a fourth action 3640 of the method, the host computer receives the user data transmitted from the UE, in accordance with the teachings of the embodiments described throughout this disclosure.

**Figure 15** is a flowchart illustrating a method implemented in a communication system, in accordance with one embodiment. The communication system includes a host computer, a base station such as a AP STA, and a UE such as a Non-AP STA which may be those described with reference to Figure 10 and Figure 11. For simplicity of the present disclosure, only drawing references to Figure 15 will be included in this section. In an optional first action 3710 of the method, in accordance with the teachings of the embodiments described throughout this disclosure, the base station receives user data from the UE. In an optional second action 3720, the base station initiates transmission of the received user data to the host computer. In a third action 3730, the host computer receives the user data carried in the transmission initiated by the base station.

## Claims

1. A method performed by a User Equipment, UE, (120) for obtaining a Band Width Part, BWP, for a respective Downlink, DL, first Uplink, UL1, and second Uplink, UL2, for a Random Access of the User Equipment, UE, (120) to a wireless communication network (100), wherein UL1 is represented by a Normal Uplink, NUL, and UL2 is represented by a Supplementary Uplink, SUL, or UL2 is represented by a NUL and UL1 is represented by a SUL, the method comprising:
when it is assumed that for every UL1 BWP with Physical Random Access Channel, PRACH, occasions, there is a corresponding UL2 BWP with PRACH occasions that has the same band width part identity, bwp id, *obtaining* (201) an UL1 BWP with PRACH occasions comprising a first bwp id and a DL BWP with the same first bwp id, and after the UL1 BWP and DL BWP have been obtained, *obtaining* (202) an UL2 BWP with PRACH occasions comprising the same first bwp id,
else, performing any one out of:
when there is a UL1 BWP and UL2 BWP with PRACH occasions with a common first bwp id, *selecting* (203) these UL1 BWP and UL2 BWP, and *selecting* (204) a DL BWP comprising the same first bwp id, and
when there is no UL1 BWP and UL2 BWP with PRACH occasions with a common first bwp id, *selecting* (205) an initial BWP for each of the respective UL1, UL2 and DL, which UL1 BWP, UL2 BWP and DL BWP thereby comprises the same first bwp id.

2. The method according to claim 1, wherein
any *obtaining* (201, 202) is represented by any one out of: remaining on or switching to.

3. The method according to claim 1, wherein
obtaining (201) UL1 BWP with PRACH occasions for the UL1 BWP comprises any one out of: remaining on an active BWP or switching to an initial BWP.

4. A method of any of the claims 2-3:
*deciding* (200) whether any one out of (a), (b) or none of (a) and (b) are assumed,
(a) it is assumed that for every NUL BWP with PRACH occasions, there is a corresponding BWP with the same band width part identity, bwp, id, on SUL with Physical Random Access Channel, PRACH, occasions
(b) it is assumed that for every SUL BWP with PRACH occasions, there is a corresponding BWP with the same band width part identity, bwp, id, on NUL with PRACH occasions, and
when (a) is assumed, performing switching of BWP
for any of the NUL, SUL and DL for Random Access according to a first rule,
when (b) is assumed, performing switching of BWP
for any of the NUL, SUL and DL for Random Access according to a second rule,
when none of (a) and (b) is assumed, performing switching of BWP for any of the NUL, SUL and DL for Random Access according to a third rule.

5. The method according to claim 4, wherein the first rule comprises:
when there is no PRACH in an active NUL BWP *obtaining* (201) comprises *switching* the active NUL and a Downlink, DL, to a respective initial BWP, and after the NUL BWP and DL BWP have been switched, *obtaining* (202) comprises *switching* the SUL to an initial BWP, wherein the SUL, the NUL and the DL all have the same bwp id,
when there is a PRACH in an active NUL BWP *obtaining* (201) comprises switching the DL to a BWP having the same bwp id as the active NUL BWP, and after the DL BWP have been switched, *obtaining* (202) comprises switching the SUL to a BWP having the same bwp id as the active NUL BWP, wherein the SUL, the NUL and the DL all have the same bwp id.

6. The method according to claim 4 4 , wherein the second rule comprises:
when there is no PRACH in an active SUL BWP, *obtaining* (201) comprises switching the active SUL and a DL to a respective initial BWP, and after the SUL BWP and DL BWP have been switched, *obtaining* (202) comprises switching the NUL to an initial BWP, wherein the SUL, the NUL and the DL all have the same bwp id,
when there is a PRACH in an active SUL BWP, *obtaining* (201) comprises switching the DL to a BWP having the same bwp id as the active SUL BWP, and after the DL BWP have been switched, *obtaining* (202) comprises switching (209b) the NUL to a BWP having the same bwp id as the active SUL BWP, wherein the SUL, the NUL and the DL all have the same bwp id.

7. A method performed by a network node (110) for configuring a User Equipment, UE, (120) to obtain a Band Width Part, BWP, for a respective Downlink, DL, first Uplink, UL1, and second Uplink, UL2, for a Random Access of the User Equipment, UE, (120) to a wireless communication network (100), wherein UL1 is represented by a Normal Uplink, NUL, and UL2 is represented by a Supplementary Uplink, SUL, or UL2 is represented by a NUL and UL1 is represented by a SUL, the method comprising: *configuring* (301) the UE (120) for:
when it is assumed that for every UL1 BWP with Physical Random Access Channel, PRACH, occasions, there is a corresponding UL2 BWP with PRACH occasions that has the same band width part identity, bwp id, *obtaining* (201) an UL1 BWP with PRACH occasions comprising a first bwp id and a DL BWP with the same first bwp id, and after the UL1 BWP and DL BWP have been obtained, *obtaining* (202) an UL2 BWP with PRACH occasions comprising the same first bwp id,
else, performing any one out of:
when there is a UL1 BWP and UL2 BWP with PRACH occasions with a common first bwp id, *selecting* (203) these UL1 BWP and UL2 BWP, and *selecting* (204) a DL BWP comprising the same first bwp id,
when there is no UL1 BWP and UL2 BWP with PRACH occasions with a common first bwp id, *selecting* (205) an initial BWP for each of the respective UL1, UL2 and DL, which UL1 BWP, UL2 BWP and DL BWP thereby comprises the same first bwp id.

8. The method according to claim 7, wherein
any *obtaining* (201, 202) is represented by any one out of: remaining on or switching to.

9. The method according to any of the claims 7-8, wherein
obtaining (201) UL1 BWP with PRACH occasions for the UL1 BWP comprises any one out of: remaining on an active BWP or switching to an initial BWP.

10. The method according to claim 9, the method further comprising: deciding (300) whether (a) it is assumed that for every NUL BWP with PRACH occasions, there is a corresponding BWP with the same band width part identity, bwp, id, on SUL with Physical Random Access Channel, PRACH, occasions, and when (a) is assumed, performing a switching of BWP for any of the NUL, SUL and DL for Random Access according to a first rule, wherein the first rule comprises:
when there is no PRACH in an active NUL BWP *obtaining* (201) comprises *switching* the active NUL and a Downlink, DL, to a respective initial BWP, and after the NUL BWP and DL BWP have been switched, *obtaining* (202) comprises *switching* the SUL to an initial BWP, wherein the SUL, the NUL and the DL all have the same bwp id,
when there is a PRACH in an active NUL BWP *obtaining* (201) comprises switching the DL to a BWP having the same bwp id as the active NUL BWP, and after the DL BWP have been switched, *obtaining* (201) comprises switching the SUL to a BWP having the same bwp id as the active NUL BWP, wherein the SUL, the NUL and the DL all have the same bwp id.

11. The method according to claim 10, the method further comprising: deciding (300) whether (b) it is assumed that for every SUL BWP with PRACH occasions, there is a corresponding BWP with the same band width part identity, bwp, id, on NUL with PRACH occasions, and when (b) is assumed, performing switching of BWP for any of the NUL, SUL and DL for Random Access according to a second rule, wherein the second rule comprises:
when there is no PRACH in an active SUL BWP, *obtaining* (201) comprises switching the active SUL and a DL to a respective initial BWP, and after the SUL BWP and DL BWP have been switched, *obtaining* (202) comprises switching the NUL to an initial BWP, wherein the SUL, the NUL and the DL all have the same bwp id,
when there is a PRACH in an active SUL BWP, *obtaining* (201) comprises switching the DL to a BWP having the same bwp id as the active SUL BWP, and after the DL BWP have been switched, *obtaining* (202) comprises switching (209b) the NUL to a BWP having the same bwp id as the active SUL BWP, wherein the SUL, the NUL and the DL all have the same bwp id.

12. A User Equipment, UE, (120) configured for obtaining a Band Width Part, BWP, for a respective Downlink, DL, first Uplink, UL1, and second Uplink, UL2, for a Random Access of the User Equipment, UE, (120) to a wireless communication network (100), wherein UL1 is represented by a Normal Uplink, NUL, and UL2 is represented by a Supplementary Uplink, SUL, or UL2 is represented by a NUL and UL1 is represented by a SUL, the UE (120) being configured to:
when it is assumed that for every UL1 BWP with Physical Random Access Channel, PRACH, occasions, there is a corresponding UL2 BWP with PRACH occasions that has the same band width part identity, bwp id, *obtain* an UL1 BWP with PRACH occasions compriing a first bwp id and a DL BWP with the same first bwp id, and after the UL1 BWP and DL BWP have been obtained, *obtain* an UL2 BWP with PRACH occasions adapted to comprise the same first bwp id,
else, perform any one out of:
when there is a UL1 BWP and UL2 BWP with PRACH occasions with a common first bwp id, *select,* these UL1 BWP and UL2 BWP, and *select* a DL BWP comprising a same first bwp id,
when there is no UL1 BWP and UL2 BWP with PRACH occasions with a common first bwp id, *select* an initial BWP for each of the respective UL1, UL2 and DL, which UL1 BWP, UL2 BWP and DL BWP thereby to comprise a same first bwp id.

13. The UE according to claim 12, wherein
any obtain is represented by any one out of: remain on or switch to.

14. The UE according to any of the claims 12-13, wherein the UE (120) further is configured to:
obtain the UL1 BWP with PRACH occasions comprising any one out of:
remain on an active BWP or switch to an initial BWP.

15. A network node (110) for configuring a User Equipment, UE, (120) to obtain a Band Width Part, BWP, for a respective Downlink, DL, first Uplink, UL1, and second Uplink, UL2, for a Random Access of the User Equipment, UE, (120) to a wireless communication network (100), wherein UL1 is represented by a Normal Uplink, NUL, and UL2 is represented by a Supplementary Uplink, SUL, or UL2 is represented by a NUL and UL1 is represented by a SUL, the network node (110) being adapted to configure the UE (120), e.g. by means of an **configuring unit 910** in the network node 110, to:
when it is assumed that for every UL1 BWP with Physical Random Access Channel, PRACH, occasions, there is a corresponding UL2 BWP with PRACH occasions that has the same band width part identity, bwp id, *obtain,* an UL1 BWP with PRACH occasions comprising a first bwp id and a DL BWP with the same first bwp id, and after the UL1 BWP and DL BWP have been obtained, *obtain* an UL2 BWP with PRACH occasions comprising the same first bwp id
else, perform any one out of:
when there is a UL1 BWP and UL2 BWP with PRACH occasions with a common first bwp id, *select* these UL1 BWP and UL2 BWP, and *select* a DL BWP comprising the same first bwp id,
when there is no UL1 BWP and UL2 BWP with PRACH occasions with a common first bwp id, *select* an initial BWP for each of the respective UL1, UL2 and DL, which UL1 BWP, UL2 BWP and DL BWP thereby comprising the same first bwp id.

16. The network node (110) according to claim 15, wherein
any of the obtain is represented by any one out of: remain on or switch to.

17. The network node (110) according to any of the claims 15-16, wherein
obtain UL1 BWP with PRACH occasions comprise any one out of: remain on an active BWP or switch to an initial BWP.

## Patentansprüche

1. Verfahren, das von einer Benutzereinrichtung, UE, (120) durchgeführt wird, zum Erhalten eines Bandbreitenteils, BWP, für einen Downlink, DL, einen ersten Uplink, UL1, bzw. einen zweiten Uplink, UL2, für einen Direktzugriff der Benutzereinrichtung, UE,
(120) auf ein drahtloses Kommunikationsnetzwerk (100), wobei der UL1 durch einen normalen Uplink, NUL, dargestellt wird, und der UL2 durch einen zusätzlichen Uplink, SUL, dargestellt wird, oder der UL2 durch einen NUL dargestellt wird, und der UL1 durch einen SUL dargestellt wird, wobei das Verfahren umfasst:
Erhalten (201), wenn angenommen wird, dass es für jeden UL1-BWP mit Physical-Random-Access-Channel- ,PRACH-,Gelegenheiten einen entsprechenden UL2-BWP mit PRACH-Gelegenheiten gibt, der die gleiche Bandbreitenteil-Identität, bwp-id, aufweist, eines UL1-BWP mit PRACH-Gelegenheiten, der eine erste bwp-id umfasst, und eines DL-BWP mit der gleichen ersten bwp-id, und Erhalten (202) eines UL2-BWP mit PRACH-Gelegenheiten, der die gleiche erste bwp-id umfasst, nach dem Erhalten des UL1-BWP und des DL-BWP, andernfalls Durchführen von einem von Folgendem:
Auswählen (203), wenn es einen UL1-BWP und einen UL2-BWP mit PRACH-Gelegenheiten mit einer gemeinsamen ersten bwp-id gibt, dieses UL1-BWP und dieses UL2-BWP und Auswählen (204) eines DL-BWP, der die gleiche erste bwp-id umfasst, und
Auswählen (205), wenn es weder einen UL1-BWP noch einen UL2-BWP mit PRACH-Gelegenheiten mit einer gemeinsamen ersten bwp-id gibt, eines anfänglichen BWP für jeden des UL1, des UL2 bzw. des DL, wobei der UL1-BWP, der UL2-BWP und der DL-BWP dadurch die gleiche erste bwp-id umfassen.

2. Verfahren nach Anspruch 1, wobei
jegliches Erhalten (201, 202) durch eines von Folgendem dargestellt wird: Bleiben auf oder Wechseln zu.

3. Verfahren nach Anspruch 1, wobei
das Erhalten (201) des UL1-BWP mit PRACH-Gelegenheiten für den UL1-BWP eines von Folgendem umfasst: Bleiben auf einem aktiven BWP oder Wechseln zu einem anfänglichen BWP.

4. Verfahren nach einem der Ansprüche 2 bis 3:
Entscheiden (200), ob eines von (a), (b) oder weder (a) noch (b) angenommen wird,
(a) es wird angenommen, dass es für jeden NUL-BWP mit PRACH-Gelegenheiten einen entsprechenden BWP mit der gleichen Bandbreitenteil-Identität, bwp-id, auf dem SUL mit Physical-Random-Access-Channel- ,PRACH-,Gelegenheiten gibt,
(b) es wird angenommen, dass es für jeden SUL-BWP mit PRACH-Gelegenheiten einen entsprechenden BWP mit der gleichen Bandbreitenteil-Identität, bwp-id, auf dem NUL mit PRACH-Gelegenheiten gibt, und Durchführen von Wechseln des BWP für einen des NUL, des SUL und des DL für Direktzugriff gemäß einer ersten Regel, wenn (a) angenommen wird,
Durchführen von Wechseln des BWP für einen des NUL, des SUL und des DL für Direktzugriff gemäß einer zweiten Regel, wenn (b) angenommen wird,
Durchführen von Wechseln des BWP für einen des NUL, des SUL und des DL für Direktzugriff gemäß einer dritten Regel, wenn weder (a) noch (b) angenommen wird.

5. Verfahren nach Anspruch 4, wobei die erste Regel umfasst, dass:
das Erhalten (201), wenn es keinen PRACH in einem aktiven NUL-BWP gibt, ein Wechseln des aktiven NUL und eines Downlink, DL, zu einem jeweiligen anfänglichen BWP umfasst, und das Erhalten (202) nach dem Wechseln des NUL-BWP und des DL-BWP ein Wechseln des SUL zu einem anfänglichen BWP umfasst, wobei der SUL, der NUL und der DL allesamt die gleiche bwp-id aufweisen,
das Erhalten (201), wenn es einen PRACH in einem aktiven NUL-BWP gibt, ein Wechseln des DL zu einem BWP mit der gleichen bwp-id wie der aktive NUL-BWP umfasst, und das Erhalten (202) nach dem Wechseln des DL-BWP ein Wechseln des SUL zu einem BWP mit der gleichen bwp-id wie der aktive NUL-BWP umfasst, wobei der SUL, der NUL und der DL allesamt die gleiche bwp-id aufweisen.

6. Verfahren nach Anspruch 4, wobei die zweite Regel umfasst, dass:
das Erhalten (201), wenn es keinen PRACH in einem aktiven SUL-BWP gibt, ein Wechseln des aktiven SUL und eines DL zu einem jeweiligen anfänglichen BWP umfasst, und das Erhalten (202) nach dem Wechseln des SUL-BWP und des DL-BWP ein Wechseln des NUL zu einem anfänglichen BWP umfasst, wobei der SUL, der NUL und der DL allesamt die gleiche bwp-id aufweisen,
das Erhalten (201), wenn es einen PRACH in einem aktiven SUL-BWP gibt, ein Wechseln des DL zu einem BWP mit der gleichen bwp-id wie der aktive SUL-BWP umfasst, und das Erhalten (202) nach dem Wechseln des DL-BWP ein Wechseln (209b) des NUL zu einem BWP mit der gleichen bwp-id wie der aktive SUL-BWP umfasst, wobei der SUL, der NUL und der DL allesamt die gleiche bwp-id aufweisen.

7. Verfahren, das von einem Netzwerkknoten (110) durchgeführt wird, zur Konfiguration einer Benutzereinrichtung, UE, (120) zum Erhalten eines Bandbreitenteils, BWP, für einen Downlink, DL, einen ersten Uplink, UL1, bzw. einen zweiten Uplink, UL2, für einen Direktzugriff der Benutzereinrichtung, UE, (120) auf ein drahtloses Kommunikationsnetzwerk (100), wobei der UL1 durch einen normalen Uplink, NUL, dargestellt wird, und der UL2 durch einen zusätzlichen Uplink, SUL, dargestellt wird, oder der UL2 durch einen NUL dargestellt wird, und der UL1 durch einen SUL dargestellt wird, wobei das Verfahren umfasst:
Konfigurieren (301) der UE (120) zum:
Erhalten (201), wenn angenommen wird, dass es für jeden UL1-BWP mit Physical-Random-Access-Channel- ,PRACH-,Gelegenheiten einen entsprechenden UL2-BWP mit PRACH-Gelegenheiten gibt, der die gleiche Bandbreitenteil-Identität, bwp-id, aufweist, eines UL1-BWP mit PRACH-Gelegenheiten, der eine erste bwp-id umfasst, und eines DL-BWP mit der gleichen ersten bwp-id, und Erhalten (202) eines UL2-BWP mit PRACH-Gelegenheiten, der die gleiche erste bwp-id umfasst, nach dem Erhalten des UL1-BWP und des DL-BWP,
andernfalls Durchführen von einem von Folgendem:
Auswählen (203), wenn es einen UL1-BWP und einen UL2-BWP mit PRACH-Gelegenheiten mit einer gemeinsamen ersten bwp-id gibt, dieses UL1-BWP und dieses UL2-BWP und Auswählen (204) eines DL-BWP, der die gleiche erste bwp-id umfasst,
Auswählen (205), wenn es weder einen UL1-BWP noch einen UL2-BWP mit PRACH-Gelegenheiten mit einer gemeinsamen ersten bwp-id gibt, eines anfänglichen BWP für jeden des UL1, des UL2 bzw. des DL, wobei der UL1-BWP, der UL2-BWP und der DL-BWP dadurch die gleiche erste bwp-id umfassen.

8. Verfahren nach Anspruch 7, wobei
jegliches Erhalten (201, 202) durch eines von Folgendem dargestellt wird: Bleiben auf oder Wechseln zu.

9. Verfahren nach einem der Ansprüche 7 bis 8, wobei das Erhalten (201) des UL1-BWP mit PRACH-Gelegenheiten für den UL1-BWP eines von Folgendem umfasst: Bleiben auf einem aktiven BWP oder Wechseln zu einem anfänglichen BWP.

10. Verfahren nach Anspruch 9, wobei das Verfahren ferner umfasst: Entscheiden (300), ob (a) angenommen wird, dass es für jeden NUL-BWP mit PRACH-Gelegenheiten einen entsprechenden BWP mit der gleichen Bandbreitenteil-Identität, bwp-id, auf dem SUL mit Physical-Random-Access-Channel-,PRACH-,Gelegenheiten gibt, und Durchführen eines Wechselns des BWP für einen des NUL, des SUL und des DL für Direktzugriff gemäß einer ersten Regel, wobei die erste Regel umfasst, dass:
das Erhalten (201), wenn es keinen PRACH in einem aktiven NUL-BWP gibt, ein Wechseln des aktiven NUL und eines Downlink, DL, zu einem jeweiligen anfänglichen BWP umfasst, und das Erhalten (202) nach dem Wechseln des NUL-BWP und des DL-BWP ein Wechseln des SUL zu einem anfänglichen BWP umfasst, wobei der SUL, der NUL und der DL allesamt die gleiche bwp-id aufweisen,
das Erhalten (201), wenn es einen PRACH in einem aktiven NUL-BWP gibt, ein Wechseln des DL zu einem BWP mit der gleichen bwp-id wie der aktive NUL-BWP umfasst, und das Erhalten (201) nach dem Wechseln des DL-BWP ein Wechseln des SUL zu einem BWP mit der gleichen bwp-id wie der aktive NUL-BWP umfasst, wobei der SUL, der NUL und der DL allesamt die gleiche bwp-id aufweisen.

11. Verfahren nach Anspruch 10, wobei das Verfahren ferner umfasst: Entscheiden (300), ob (b) angenommen wird, dass es für jeden SUL-BWP mit PRACH-Gelegenheiten einen entsprechenden BWP mit der gleichen Bandbreitenteil-Identität, bwp-id, auf dem NUL mit PRACH-Gelegenheiten gibt, und Durchführen von Wechseln des BWP für einen des NUL, des SUL und des DL für Direktzugriff gemäß einer zweiten Regel, wobei die zweite Regel umfasst, dass:
das Erhalten (201), wenn es keinen PRACH in einem aktiven SUL-BWP gibt, ein Wechseln des aktiven SUL und eines DL zu einem jeweiligen anfänglichen BWP umfasst, und das Erhalten (202) nach dem Wechseln des SUL-BWP und des DL-BWP ein Wechseln des NUL zu einem anfänglichen BWP umfasst, wobei der SUL, der NUL und der DL allesamt die gleiche bwp-id aufweisen,
das Erhalten (201), wenn es einen PRACH in einem aktiven SUL-BWP gibt, ein Wechseln des DL zu einem BWP mit der gleichen bwp-id wie der aktive SUL-BWP umfasst, und das Erhalten (202) nach dem Wechseln des DL-BWP ein Wechseln (209b) des NUL zu einem BWP mit der gleichen bwp-id wie der aktive SUL-BWP umfasst, wobei der SUL, der NUL und der DL allesamt die gleiche bwp-id aufweisen.

12. Benutzereinrichtung, UE, (120), die zum Erhalten eines Bandbreitenteils, BWP, für einen Downlink, DL, einen ersten Uplink, UL1, bzw. einen zweiten Uplink, UL2, für Direktzugriff der Benutzereinrichtung, UE, (120) auf ein drahtloses Kommunikationsnetzwerk (100) konfiguriert ist, wobei der UL1 durch einen normalen Uplink, NUL, dargestellt wird, und der UL2 durch einen zusätzlichen Uplink, SUL, dargestellt wird, oder der UL2 durch einen NUL dargestellt wird, und der UL1 durch einen SUL dargestellt wird, wobei die UE (120) konfiguriert ist zum:
Erhalten, wenn angenommen wird, dass es für jeden UL1-BWP mit Physical-Random-Access-Channel-,PRACH- ,Gelegenheiten einen entsprechenden UL2-BWP mit PRACH-Gelegenheiten gibt, der die gleiche Bandbreitenteil-Identität, bwp-id, aufweist, eines UL1-BWP mit PRACH-Gelegenheiten, der eine erste bwp-id umfasst, und eines DL-BWP mit der gleichen ersten bwp-id, und Erhalten eines UL2-BWP mit PRACH-Gelegenheiten, der so ausgelegt ist, dass die gleiche erste bwp-id umfasst, nach dem Erhalten des UL1-BWP und des DL-BWP,
andernfalls Durchführen von einem von Folgendem:
Auswählen, wenn es einen UL1-BWP und einen UL2-BWP mit PRACH-Gelegenheiten mit einer gemeinsamen ersten bwp-id gibt, dieses UL1-BWP und dieses UL2-BWP und
Auswählen eines DL-BWP, der eine gleiche erste bwp-id umfasst,
Auswählen, wenn es weder einen UL1-BWP noch einen UL2-BWP mit PRACH-Gelegenheiten mit einer gemeinsamen ersten bwp-id gibt, eines anfänglichen BWP für jeden des UL1, des UL2 bzw. des DL, wobei der UL1-BWP, der UL2-BWP und der DL-BWP dadurch eine gleiche erste bwp-id umfassen.

13. UE nach Anspruch 12, wobei
jegliches Erhalten durch eines von Folgendem dargestellt wird: Bleiben auf oder Wechseln zu.

14. UE nach einem der Ansprüche 12 bis 13, wobei die UE (120) ferner so konfiguriert ist, dass:
das Erhalten des UL1-BWP mit PRACH-Gelegenheiten eines von Folgendem umfasst: Bleiben auf einem aktiven BWP oder Wechseln zu einem anfänglichen BWP.

15. Netzwerkknoten (110) zum Konfigurieren einer Benutzereinrichtung, UE, (120) zum Erhalten eines Bandbreitenteils, BWP, für einen Downlink, DL, einen ersten Uplink, UL1, bzw. einen zweiten Uplink, UL2, für Direktzugriff der Benutzereinrichtung, UE, (120) auf ein drahtloses Kommunikationsnetzwerk (100), wobei der UL1 durch einen normalen Uplink, NUL, dargestellt wird, und der UL2 durch einen zusätzlichen Uplink, SUL, dargestellt wird, oder der UL2 durch einen NUL dargestellt wird, und der UL1 durch einen SUL dargestellt wird, wobei der Netzwerkknoten (110) so ausgelegt ist, dass er die UE (120) z. B. mittels einer Konfigurationseinheit 910 im Netzwerkknoten (110) konfiguriert zum:
Erhalten, wenn angenommen wird, dass es für jeden UL1-BWP mit Physical-Random-Access-Channel-,PRACH- ,Gelegenheiten einen entsprechenden UL2-BWP mit PRACH-Gelegenheiten gibt, der die gleiche Bandbreitenteil-Identität, bwp-id, aufweist, eines UL1-BWP mit PRACH-Gelegenheiten, der eine erste bwp-id umfasst, und eines DL-BWP mit der gleichen ersten bwp-id, und Erhalten eines UL2-BWP mit PRACH-Gelegenheiten, der die gleiche erste bwp-id umfasst, nach dem Erhalten des UL1-BWP und des DL-BWP,
andernfalls Durchführen von einem von Folgendem:
Auswählen, wenn es einen UL1-BWP und einen UL2-BWP mit PRACH-Gelegenheiten mit einer gemeinsamen ersten bwp-id gibt, dieses UL1-BWP und dieses UL2-BWP und Auswählen eines DL-BWP, der die gleiche erste bwp-id umfasst,
Auswählen, wenn es weder einen UL1-BWP noch einen UL2-BWP mit PRACH-Gelegenheiten mit einer gemeinsamen ersten bwp-id gibt, eines anfänglichen BWP für jeden des UL1, des UL2 bzw. des DL, wobei der UL1-BWP, der UL2-BWP und der DL-BWP dadurch die gleiche erste bwp-id umfassen.

16. Netzwerkknoten (110) nach Anspruch 15, wobei jegliches Erhalten dargestellt wird durch eines von Folgendem:
Bleiben auf oder Wechseln zu.

17. Netzwerkknoten (110) nach einem der Ansprüche 15 bis 16, wobei
das Erhalten des UL1-BWP mit PRACH-Gelegenheiten eines von Folgendem umfasst: Bleiben auf einem aktiven BWP oder Wechseln zu einem anfänglichen BWP.

## Revendications

1. Procédé réalisé par un équipement utilisateur, UE, (120) pour obtenir une partie de largeur de bande, BWP, pour respectivement une liaison descendante, DL, une première liaison montante, UL1, et une deuxième liaison montante, UL2, pour un accès aléatoire de l'équipement utilisateur, UE, (120) à un réseau de communication sans fil (100), dans lequel UL1 est représentée par une liaison montante normale, NUL, et UL2 est représentée par une liaison montante supplémentaire, SUL, ou UL2 est représentée par une NUL et UL1 est représentée par une SUL, le procédé comprenant :
lorsqu'il est supposé que, pour chaque BWP UL1 avec des occasions de canal d'accès aléatoire physique, PRACH, il y a une BWP UL2 correspondante avec des occasions PRACH ayant la même identité de partie de largeur de bande, id bwp, l'obtention (201) d'une BWP UL1 avec des occasions PRACH comprenant une première id bwp et une BWP DL avec la même première id bwp, et après que la BWP UL1 et la BWP DL ont été obtenues, l'obtention (202) d'une BWP UL2 avec des occasions PRACH comprenant la même première id bwp,
sinon, la réalisation de l'un quelconque parmi ce qui suit :
lorsqu'il y a une BWP UL1 et une BWP UL2 avec des occasions PRACH avec une première id bwp commune, la sélection (203) de ces BWP UL1 et BWP UL2, et la sélection (204) d'une BWP DL comprenant la même première id bwp, et
lorsqu'il n'y a pas de BWP UL1 et de BWP UL2 avec des occasions PRACH avec une première id bwp commune, la sélection (205) d'une BWP initiale pour chacune respectivement de UL1, UL2 et DL, et BWP UL1, BWP UL2 et BWP DL comprennent de ce fait la même première id bwp.

2. Procédé selon la revendication 1, dans lequel toute obtention (201, 202) est représentée par le maintien ou la commutation.

3. Procédé selon la revendication 1, dans lequel l'obtention (201) de BWP UL1 avec des occasions PRACH pour la BWP UL1 comprend le maintien sur une BWP active ou la commutation à une BWP initiale.

4. Procédé selon la revendication 2 ou 3, comprenant :
la décision (200) si l'un quelconque parmi (a), (b) ou ni (a) ni (b) est supposé,
(a) il est supposé que, pour chaque BWP NUL avec des occasions PRACH, il y a une BWP correspondante avec la même identité de partie de largeur de bande, id bwp, sur SUL avec des occasions de canal d'accès aléatoire physique, PRACH,
(b) il est supposé que, pour chaque BWP SUL avec des occasions PRACH, il y a une BWP correspondante avec la même identité de partie de largeur de bande, id bwp, sur NUL avec des occasions PRACH, et
lorsque (a) est supposé, la réalisation de la commutation de BWP pour n'importe laquelle parmi NUL, SUL et DL pour un accès aléatoire selon une première règle,
lorsque (b) est supposé, la réalisation de la commutation de BWP pour n'importe laquelle parmi NUL, SUL et DL pour un accès aléatoire selon une deuxième règle,
lorsque ni (a) ni (b) n'est supposé, la réalisation de la commutation de BWP pour n'importe laquelle de NUL, SUL et DL pour un accès aléatoire selon une troisième règle.

5. Procédé selon la revendication 4, dans lequel la première règle comprend :
lorsqu'il n'y a pas de PRACH dans une BWP NUL active, l'obtention (201) comprend la commutation de la NUL active et d'une liaison descendante, DL, à une BWP initiale respective, et après que la BWP NUL et la BWP DL ont été commutées, l'obtention (202) comprend la commutation de la SUL à une BWP initiale, dans lequel la SUL, la NUL et la DL ont toutes la même id bwp,
lorsqu'il y a un PRACH dans une BWP NUL active, l'obtention (201) comprend la commutation de la DL à une BWP ayant la même id bwp que la BWP NUL active, et après que la BWP DL a été commutée, l'obtention (202) comprend la commutation de la SUL à une BWP ayant la même id bwp que la BWP NUL active, dans lequel la SUL, la NUL et la DL ont toutes la même id bwp.

6. Procédé selon la revendication 4, dans lequel la deuxième règle comprend :
lorsqu'il n'y a pas un PRACH dans une BWP SUL active, l'obtention (201) comprend la commutation de la SUL active et d'une DL à une BWP initiale respective, et après que la BWP SUL et la BWP DL ont été commutées, l'obtention (202) comprend la commutation de la NUL à une BWP initiale, dans lequel la SUL, la NUL et la DL ont toutes la même id bwp,
lorsqu'il y a un PRACH dans une BWP SUL active, l'obtention (201) comprend la commutation de la DL à une BWP ayant la même id bwp que la BWP SUL active, et après que la BWP DL a été commutée, l'obtention (202) comprend la commutation (209b) de la NUL à une BWP ayant la même id bwp que la BWP SUL active, dans lequel la SUL, la NUL et la DL ont toutes la même id bwp.

7. Procédé réalisé par un nœud de réseau (110) pour configurer un équipement utilisateur, UE, (120) pour obtenir une partie de largeur de bande, BWP, pour respectivement une liaison descendante, DL, une première liaison montante, UL1, et une deuxième liaison montante, UL2, pour un accès aléatoire de l'équipement utilisateur, UE, (120) à un réseau de communication sans fil (100), dans lequel UL1 est représentée par une liaison montante normale, NUL, et UL2 est représentée par une liaison montante supplémentaire, SUL, ou UL2 est représentée par une NUL et UL1 est représentée par une SUL, le procédé comprenant :
la configuration (301) de l'UE (120) pour :
lorsqu'il est supposé que, pour chaque BWP UL1 avec des occasions de canal d'accès aléatoire physique, PRACH, il y a une BWP UL2 correspondante avec des occasions PRACH ayant la même identité de partie de largeur de bande, id bwp, l'obtention (201) d'une BWP UL1 avec des occasions PRACH comprenant une première id bwp et une BWP DL avec la même première id bwp, et après que la BWP UL1 et la BWP DL ont été obtenues, l'obtention (202) d'une BWP UL2 avec des occasions PRACH comprenant la même première id bwp,
sinon, la réalisation de l'un quelconque parmi ce qui suit :
lorsqu'il y a une BWP UL1 et une BWP UL2 avec des occasions PRACH avec une première id bwp commune, la sélection (203) de ces BWP UL1 et BWP UL2, et la sélection (204) d'une BWP DL comprenant la même première id bwp, et
lorsqu'il n'y a pas de BWP UL1 et de BWP UL2 avec des occasions PRACH avec une première id bwp commune, la sélection (205) d'une BWP initiale pour chacune respectivement de UL1, UL2 et DL, et BWP UL1, BWP UL2 et BWP DL comprennent de ce fait la même première id bwp.

8. Procédé selon la revendication 7, dans lequel toute obtention (201, 202) est représentée par le maintien ou la commutation.

9. Procédé selon la revendication 7 ou 8, dans lequel l'obtention (201) de BWP UL1 avec des occasions PRACH pour la BWP UL1 comprend le maintien sur une BWP active ou la commutation à une BWP initiale.

10. Procédé selon la revendication 9, le procédé comprenant en outre : la décision (300) si (a) il est supposé que, pour chaque BWP NUL avec des occasions PRACH, il y a une BWP correspondante avec la même identité de partie de largeur de bande, id bwp, sur SUL avec des occasions de canal d'accès aléatoire physique, PRACH, et lorsque (a) est supposé, la réalisation d'une commutation de BWP pour n'importe laquelle parmi NUL, SUL et DL pour un accès aléatoire selon une première règle, dans lequel la première règle comprend :
lorsqu'il n'y a pas de PRACH dans une BWP NUL active, l'obtention (201) comprend la commutation de la NUL active et d'une liaison descendante, DL, à une BWP initiale respective, et après que la BWP NUL et la BWP DL ont été commutées, l'obtention (202) comprend la commutation de la SUL à une BWP initiale, dans lequel la SUL, la NUL et la DL ont toutes la même id bwp,
lorsqu'il y a un PRACH dans une BWP NUL active, l'obtention (201) comprend la commutation de la DL à une BWP ayant la même id bwp que la BWP NUL active, et, après que la BWP DL a été commutée, l'obtention (201) comprend la commutation de la SUL à une BWP ayant la même id bwp que la BWP NUL active, dans lequel la SUL, la NUL et la DL ont toutes la même id bwp.

11. Procédé selon la revendication 10, le procédé comprenant en outre : la décision (300) si (b) il est supposé que, pour chaque BWP SUL avec des occasions PRACH, il y a une BWP correspondante avec la même identité de partie de largeur de bande, id bwp, sur NUL avec des occasions PRACH, et lorsque (b) est supposé, la réalisation de la commutation de BWP pour n'importe laquelle parmi NUL, SUL et DL pour un accès aléatoire selon une deuxième règle, dans lequel la deuxième règle comprend :
lorsqu'il n'y a pas un PRACH dans une BWP NUL active, l'obtention (201) comprend la commutation de la SUL active et d'une DL à une BWP initiale respective, et après que la BWP SUL et la BWP DL ont été commutées, l'obtention (202) comprend la commutation de la NUL à une BWP initiale, dans lequel la SUL, la NUL et la DL ont toutes la même id bwp,
lorsqu'il y a un PRACH dans une BWP NUL active, l'obtention (201) comprend la commutation de la DL à une BWP ayant la même id bwp que la BWP SUL active, et après que la BWP DL a été commutée, l'obtention (202) comprend la commutation (209b) de la NUL à une BWP ayant la même id bwp que la BWP SUL active, dans lequel la SUL, la NUL et la DL ont toutes la même id bwp.

12. Equipement utilisateur, UE, (120) configuré pour obtenir une partie de largeur de bande, BWP, pour respectivement une liaison descendante, DL, une première liaison montante, UL1, et une deuxième liaison montante, UL2, pour un accès aléatoire de l'équipement utilisateur, UE, (120) à un réseau de communication sans fil (100), dans lequel UL1 est représentée par une liaison montante normale, NUL, et UL2 est représentée par une liaison montante supplémentaire, SUL, ou UL2 est représentée par une NUL et UL1 est représentée par une SUL, l'UE (120) étant configuré pour :
lorsqu'il est supposé que, pour chaque BWP UL1 avec des occasions de canal d'accès aléatoire physique, PRACH, il y a une BWP UL2 correspondante avec des occasions PRACH ayant la même identité de partie de largeur de bande, id bwp, obtenir une BWP UL1 avec des occasions PRACH comprenant une première id bwp et une BWP DL avec la même première id bwp, et après que la BWP UL1 et la BWP DL ont été obtenues, obtenir une BWP UL2 avec des occasions PRACH aptes à comprendre la même première id bwp,
sinon réaliser l'un quelconque parmi ce qui suit :
lorsqu'il y a une BWP UL1 et une BWP UL2 avec des occasions PRACH avec une première id bwp commune, sélectionner ces BWP UL1 et BWP UL2, et sélectionner une BWP DL comprenant la même première id bwp,
lorsqu'il n'y a pas de BWP UL1 et de BWP UL2 avec des occasions PRACH avec une première id bwp commune, sélectionner une BWP initiale pour chacune respectivement de UL1, UL2 et DL, et BWP UL1, BWP UL2 et BWP DL comprennent de ce fait la même première id bwp.

13. UE selon la revendication 12, dans lequel toute obtention est représentée par le maintien ou la commutation.

14. UE selon la revendication 12 ou 13, dans lequel l'UE (120) est en outre configuré pour :
obtenir la BWP UL1 avec des occasions PRACH comprenant le maintien sur une BWP active ou la commutation à une BWP initiale.

15. Nœud de réseau (110) pour configurer un équipement utilisateur, UE, (120) pour obtenir une partie de largeur de bande, BWP, pour respectivement une liaison descendante, DL, une première liaison montante, UL1, et une deuxième liaison montante, UL2, pour un accès aléatoire de l'équipement utilisateur, UE, (120) à un réseau de communication sans fil (100), dans lequel UL1 est représentée par une liaison montante normale, NUL, et UL2 est représentée par une liaison montante supplémentaire, SUL, ou UL2 est représentée par une NUL et UL1 est représentée par une SUL, le nœud de réseau (110) étant apte à configurer l'UE (120) , par exemple au moyen d'une unité de configuration (910) dans le nœud de réseau (110), pour :
lorsqu'il est supposé que, pour chaque BWP UL1 avec des occasions de canal d'accès aléatoire physique, PRACH, il y a une BWP UL2 correspondante avec des occasions PRACH ayant la même identité de partie de largeur de bande, id bwp, obtenir une BWP UL1 avec des occasions PRACH comprenant une première id bwp et une BWP DL avec la même première id bwp, et après que la BWP UL1 et la BWP DL ont été obtenues, obtenir une BWP UL2 avec des occasions PRACH comprenant la même première id bwp,
sinon, réaliser l'un quelconque parmi ce qui suit :
lorsqu'il y a une BWP UL1 et une BWP UL2 avec des occasions PRACH avec une première id bwp commune, sélectionner ces BWP UL1 et BWP UL2, et sélectionner une BWP DL comprenant la même première id bwp,
lorsqu'il n'y a pas de BWP UL1 et de BWP UL2 avec des occasions PRACH avec une première id bwp commune, sélectionner une BWP initiale pour chacune respectivement de UL1, UL2 et DL, et BWP UL1, BWP UL2 et BWP DL comprennent de ce fait la même première id bwp.

16. Nœud de réseau (110) selon la revendication 15, dans lequel
toute obtention est représentée par le maintien ou la commutation.

17. Nœud de réseau (110) selon la revendication 15 ou 16, dans lequel
l'obtention de BWP UL1 avec des occasions PRACH comprend le maintien sur une BWP active ou la commutation à une BWP initiale.
